# EUROPEAN PATENT APPLICATION

(11) **EP 4 193 828 A1**
(43) Date of publication of application: **14.06.2023**
(21) Application number: 22207754.7
(22) Date of filing: 16.11.2022
(51) Int. Cl.: A01G 9/029, A01G 9/08

(54) **HORTICULTURAL PLUG TRANSPLANTING MACHINE**

(30) Priority: 16.11.2021 GB 202116476
(71) Applicant: Micropropagation Services (E.M.) Limited, Loughborough, Leicestershire LE12 6NZ (GB)
(72) Inventor: WRIGHT, Neal, Loughborough, Leicestershire, LE12 6NZ (GB)
(74) Representative: Wright, Leonard William

(57) **Abstract**

A horticultural plug transplanting machine (100) adapted for transplanting *Sphagnum* is provided. The machine (100) comprises a gripping element (102) comprising a plurality of fingers (104) for gripping a plug of *Sphagnum* (150). The machine (100) also comprises an actuator (108) and a pushing element (106). The pushing element (106) is coupled to the gripping element (102) and is operable by moving the gripping element (102). The actuator (108) is configured to operate the gripping element (102) to transplant the plug of *Sphagnum* (150) from a first location (112) to a second location (114), and to operate the pushing element (106) to push the plug of *Sphagnum* (150) to tilt the plug of *Sphagnum* (150) from a first orientation to a second orientation at the second location (114).

## Description

The present disclosure relates to a horticultural plug transplanting machine adapted for transplanting *Sphagnum.*

Horticultural plug transplanting machines are often used to transplant plug plants from one location to another. For instance, transplanting machines are often used to transplant plug plants from one tray to another. This can be used to move the plug plants into larger trays for the next stage of growth. Typically a transplanting machine picks up the plug plant from a first tray which often includes a small amount of growing media held by the roots, and plants it in a second tray, often into a larger cell of a plug tray with more growing media. Conventional transplanting machines include the RW16 machine, commercially available from Urbinati, Italy.

*Sphagnum* is a genus of moss. It is a lower plant, or a non-vascular plant, and is an example of a bryophyte. Unlike other plants, *Sphagnum* does not have roots. Accordingly, it typically grows on top of a surface of a growing medium without roots penetrating the growing medium. Unlike other plants, *Sphagnum* can survive for long periods without growing media. For instance, *Sphagnum* can be stored for periods (e.g. at least one month) without growing media. *Sphagnum* can hold large amounts of water and nutrients in its hyaline cells, which allows it to be removed from a growing medium for longer periods than other plants. Other plants would typically undergo stress and potential damage or death due to the exposure of the roots and the lack of water and nutrient supply.

*Sphagnum* can be grown in plugs, which are collections of strands of *Sphagnum.* It is desirable to wrap plugs of *Sphagnum* into a roll. This can contain the plug for transport and ready for planting. To achieve this, the plugs of *Sphagnum* can be placed onto a wrapping ready for rolling. It is difficult, inefficient, and slow to remove plugs of *Sphagnum* from plug trays and wrap them by hand. Conventional horticultural plug transplanting machines are not suitable for transplanting plugs of *Sphagnum* to be wrapped.

The present disclosure seeks to address one or more of the above problems.

Aspects of the invention are set out in the independent claims and preferred features are set out in the dependent claims.

According to a first aspect of the present disclosure, there is provided: a horticultural plug transplanting machine adapted for transplanting *Sphagnum,* comprising:
a gripping element for gripping a plug of *Sphagnum,* wherein the gripping element comprises a plurality of fingers;
an actuator for operating the gripping element; and
a pushing element for pushing the plug of *Sphagnum,* wherein the pushing element is coupled to the gripping element and is operable by moving the gripping element;
wherein the actuator is configured to operate the gripping element to transplant the plug of *Sphagnum* from a first location to a second location; and
wherein the actuator is configured to operate the pushing element to push the plug of *Sphagnum* to tilt the plug of *Sphagnum* from a first orientation to a second orientation at the second location, comprising translating the gripping element to translate the pushing element, wherein the translating causes the pushing element to push the plug of *Sphagnum* over at the second location to tilt the plug of *Sphagnum* into the second orientation.

By tilting the plug of *Sphagnum* from a first orientation to a second orientation, the plug of *Sphagnum* can not only be moved from a first location to a second location, but the orientation can be changed. This is more convenient for subsequent handling of plugs, such as for wrapping a plurality of plugs because the plugs can be arranged at a different orientation, such as against a wrapping substrate.

As used herein, the term "plug" preferably refers to a unit of *Sphagnum.* In particular, the plug of *Sphagnum* may be referred to as a clump or cluster of *Sphagnum.* The plug is preferably a collection of strands of *Sphagnum.* A plug plant, when used in relation to vascular plants, is typically a small seedling plant with roots holding a small amount of growing media. Plug plants are generally grown in plug cell trays with each plug plant in a plug cell of the tray. However, unlike other plants *Sphagnum* does not have roots and thus does not have roots which penetrate and hold growing media. Thus, the plug of *Sphagnum* preferably substantially does not include growing media. Instead, the *Sphagnum* grows on the surface of the growing media, but can easily be removed from the growing media.

It is not a requirement that *Sphagnum* is kept vertically because it does not have roots. In particular, plug plants are typically arranged vertically so that the roots are orientated downwards. In traditional transplanting systems, a plug plant is taken from a vertical orientation from a plug cell tray and planted in a second plug cell tray in a similarly vertical orientation. It is required to plant the plug plant vertically to ensure the roots are placed into the growing medium in the second plug cell tray.

In contrast, *Sphagnum* can survive for long periods without a growing medium. *Sphagnum* can in fact be planted without any growing medium. Accordingly, it is desirable to supply *Sphagnum* in plugs without growing media. This can be achieved by wrapping the plugs of *Sphagnum* in a wrapping substrate, for instance. To wrap the plugs of *Sphagnum,* it is beneficial to orient the plugs to a second orientation so that they can be wrapped, rather than attempting to wrap them in their usual vertical orientation. Accordingly, the machine of the present disclosure allows the plug of *Sphagnum* to be tilted to a second orientation to allow for convenient wrapping. The angle permits the plug to be rested on the wrapping to permit easier wrapping. Such a situation is not envisaged in ordinary plug plants, but this provides advantages for *Sphagnum.* Accordingly, the machine of the present disclosure is specifically adapted for transplanting *Sphagnum.*

As used herein, the term "transplanting" preferably refers to moving the plug of *Sphagnum* from a first location to a second location.

Optionally, the transplanting the plug comprises: translating the gripping element towards the first location; closing the plurality of fingers to grip the plug of *Sphagnum* at the first location; translating the gripping element towards the second location; and opening the plurality of fingers to release the plug of *Sphagnum* at the second location.

In other words, the gripping element can be translated towards the first location, such as to the first location, where the plug of *Sphagnum* is arranged. The fingers of the gripping element can then be closed to grip the plug, such that it can be transplanted. The gripping element can then be translated away from the first location towards the second location, moving the plug due to the gripping of the plug by the closed fingers. The fingers can then be opened at the second location to release the plug. In this manner, the plug is moved from the first location to the second location.

Optionally, the translating the gripping element towards the first location comprises: translating the gripping element in a first plane, the first plane comprising a first axis and a second axis, to a position aligned with the first location along a third axis, wherein the third axis is perpendicular to the first axis and the second axis; and extending the gripping element in the third axis towards the first location.

The gripping element may be moved in a first plane, for example in a horizontal plane, to a position aligned with the first location, such as above the first location. The first and second axis may be perpendicular, for example horizontal, and the third axis may be vertical. The gripping element may then be extended, for example downwards, towards the first location in order to translate the gripping element to the first location, for then gripping the plug at the first location. In some examples, the movement in the first plane is composite with the movement in the third axis, for example where the gripping element moves downwards as it moves horizontally in the first axis and/or second axis.

Optionally, the translating the gripping element towards the second location comprises: retracting the gripping element in the third axis away from the first location; translating the gripping element in the first plane to a position aligned with the second location along the third axis; and extending the gripping element in the third axis towards the second location.

The gripping element may be retracted, such as by raising the gripping element upwards, away from the first location, to raise the gripped plug. The gripping element may then move in the first plane (or in the first axis and/or the second axis) to move the plug above the second location. The gripping element can then be extended, for example downward, for releasing the plug at the second location. In some examples, the movement in the first plane is composite with the movement in the third axis, for example where the gripping element moves upwards/downwards as it moves horizontally in the first axis and/or second axis.

Optionally, the translating the gripping element to translate the pushing element is in the second axis. Thus, the gripping element may be moved in the second axis to translate the pushing element in the second axis. This allows the pushing element to push the plug in the second axis.

The pushing element is used to push the plug of *Sphagnum* over to tilt the plug into the second orientation. The pushing element is coupled to the gripping element. For example, preferably the pushing element is rigidly connected to the gripping element. This means that the pushing element can be moved by moving the gripping element. This is particularly advantageous because the gripping element can be used to control movement of the pushing element. As the gripping element is already configured for movement in the second axis, the same mechanism can be used to generate movement of the pushing element in the second axis to push the plug of *Sphagnum.* This avoids the need for a separate pushing element which is independently movable. Instead, the gripping element can be moved which in turn moves the pushing element. This greatly simplifies the machinery required to tilt the plug onto its side. Additionally, mechanising this movement improves efficiency, accuracy, and speed compared to tilting the plug by hand.

Optionally, the plug of *Sphagnum* in the second orientation is arranged on its side at the second location. This allows the plug to rest on its side at the second location. This makes it easier to wrap the plug when it is arranged on its side. The side of the plug is preferably defined as a part of the outer surface of the plug which extends along its length. The length of the plug is preferably the dimension in which the strands of *Sphagnum* are generally arranged. The length of the plug is preferably the longest dimension of the plug. For example, the length may be the average orientation of the lengths of the strands in the plug.

Optionally, a length of the plug of *Sphagnum* in the second orientation is aligned with the first plane. In other words, when the plug is in the second orientation, the length of the plug is aligned with the first plane. For example, the length of the plug may be generally parallel to the surface on which the plug rests. In other words, the width of the plug, which is perpendicular to the length of the plug, may extend in the third axis.

Optionally, the tilting is performed about the first axis. Thus, the plug tilts about the first axis when pushed by the pushing element. The plug effectively pivots at the second location in a plane formed from the second and third axes. This plane of rotation is perpendicular to the first plane. The plane of rotation may be referred to as a second plane.

Optionally, the plug of *Sphagnum* in the first orientation is arranged upright at the first location. This allows the plug to be arranged in a usual orientation for growing. Thus, the plug does not need to be reoriented before transplanting. This makes it more convenient, especially where the plug is arranged in a plug tray. Upright is the usual orientation for plugs in a plug tray. This allows *Sphagnum* to be grown in a plug tray in a usual manner. As the plug is upright, the length of the plug may be generally aligned with the third axis.

Optionally, the machine further comprises a plug tray at the first location, wherein the plug of *Sphagnum* is arranged in a plug cell of the plug tray at the first location. A plug tray is a tray for growing plug plants typically used in horticulture. A plug cell is an individual cavity in the plug tray. The plug tray comprises a plurality of plug cells each for receiving a plug plant. The plug of *Sphagnum* can be arranged in the plug cell. In some embodiments, a plurality of plugs may be provided, and each may be provided in a respective plug cell of the plug tray. In some examples, the plug tray comprises at least 100 cells, for example 128 cells arranged as sixteen rows of eight.

Optionally, the machine further comprises a substrate at the second location, wherein the plug of *Sphagnum* is arranged on the substrate at the second location. The substrate may be movable relative to the surface of the machine at which the second location is arranged. For instance, the machine may comprise a surface which passes through the second location and the plug may be arranged on the surface. In some examples, the substrate may be arranged over the surface and the plug is arranged on the substrate. The substrate can then be removed from the surface to remove the transplanted plug from the machine. This assists removal of the transplanted plug.

Optionally, the substrate comprises a wrapping for wrapping the plug of *Sphagnum* on its side about the second axis. For example, the wrapping may comprise a sheet in which the plug is wrapped. The plug may be released onto the wrapping and then the wrapping can be wrapped around the plug. Because the plug is arranged on its side, the wrapping can easily be wrapped around the plug as the plug is resting on the wrapping on its side. This aids the wrapping procedure compared to attempting to wrap the plug around its side when the plug is in the upright position. In some examples, the wrapping comprises a flexible sheet. For example, the wrapping may be made from plastic or paper.

Optionally, the pushing element is configured to push the plug of *Sphagnum* at an upper portion of the plug of *Sphagnum.* The upper portion is preferably a portion of the plug which is arranged towards an upper end of the plug. The upper end is preferably an end of the plug along its length which is towards the top of the plug. When the plug is arranged upright, the upper end is the top end of the plug. The upper end may be the end which is furthest from the surface of the machine on which the plug is arranged when upright (or for example the end furthest from the bottom of the plug tray in which it is arranged). The upper portion is preferably a portion of the plug above a midpoint along the length of the plug. The pushing element may be configured to push the plug at least at a point in the top half of the plug. By pushing the plug at the upper portion, this enables the pushing element to push the plug over. The pushing force can be directed to a point above the centre of mass of the plug so that the plug tips over about the first axis.

In some examples, the pushing element is arranged, when pushing the plug of *Sphagnum,* at a distance in the third axis from the second location of between 2.5 cm and 7.5 cm. In other words, the height of the pushing element from the surface of the machine on which the plug is to be released is between 2.5 cm and 7.5 cm (for example, above the wrapping). This ensures that the pushing element contacts the plug given the expected height of the plug, and preferably ensures that the pushing element contacts the plug at an upper portion of the plug. For example, if the plug has a height of 7.5 cm from the surface when released (e.g. from the wrapping), and if the pushing element is arranged at a height of 5 cm, the pushing element can push the upper portion of the plug. Preferably, references to the position of the pushing element in the third axis refers to a lowest portion of the pushing element, where the pushing element may extend a height above this.

Optionally, the pushing element is arranged, when pushing the plug of *Sphagnum,* at a distance in the third axis from the second location closer than the plurality of fingers is to the second location. In other words, the pushing element is closer to the second location than the plurality of fingers in the third axis. This ensures that the pushing element can push the plug without the fingers interfering. Preferably, the plurality of fingers are withdrawn from the plug so that the movement of the gripping element to move the pushing element does not cause the plurality of fingers to drag the plug.

In some examples, the pushing element has a width of at least 1 cm in the first axis. This ensures a large surface to engage the plug given the expected width of the plug to assist the pushing element to push the plug. In some examples, the pushing element has a width of at least 2.5 cm in the first axis.

Optionally, the pushing element comprises a flexible flap for engaging the plug. The flap is flexible so that it can bend and deform under pressure. As the pushing element is pushes against the plug, the flexible flap can bend to accommodate the plug. This enhances pushing force by increasing contact. This additionally helps avoid damage by the pushing element contacting the surface of the machine on which the plug is arranged or the plug tray. Instead of a rigid component, the flexible flap can bend without causing damage.

In some examples, the pushing element pushes the plug at the flexible flap. In some examples, the pushing element only contacts the plug at the flexible flap.

In some examples, the flexible flap is formed from a flexible material. For example, the flexible flap may comprise an elastic or deformable material. For example, the flexible flap may be formed from rubber. For example, the flexible flap may be formed from foam rubber.

In some examples, the gripping element comprises a main body. In some examples, the plurality of fingers are connected to the main body of the gripping element. In some examples, the pushing element is coupled to the main body.

In some examples, the pushing element comprises an arm coupled to the main body of the gripping element. The arm may be arranged to extend in the third axis. The arm may be arranged on a first side of the gripping element opposite to the second location relative to the first location. In some examples, the flexible flap may be connected to an end of the arm. The flexible flap may be connected to the main body of the gripping element via the arm. The flexible flap may be arranged on the first side of the gripping element opposite to the second location relative to the first location.

In some examples, the flexible flap is arranged to deform in the second axis away from the gripping element. This is in a direction opposite to the direction towards the second location from the first location.

In some examples, the arm is at least 0.5 cm above the upper surface of the plug tray when the plug is gripped at the first location. This avoids the arm contacting the plug tray. For example, the lowermost part of the arm is between 0.5 cm and 5 cm from the upper surface of the plug tray, preferably 0.5 cm to 1.5 cm. In some examples, the arm is at least 2 cm above the upper surface of the wrapping when the plug is released at the second location. This avoids the arm contacting the wrapping . For example, the lowermost part of the arm is between 2 cm and 10 cm from the upper surface of the wrapping, preferably 5 cm to 6 cm.

Optionally, the first axis and the second axis are each generally horizontal and the third axis is generally vertical. Movement in the third axis may thus refer to upwards and downwards movement. Movement in the first and second axes may thus refer to sideways movement.

Optionally, the extending in the third axis comprises lowering in the vertical direction, and the retracting in the third axis comprises raising in the vertical direction. In other words, the step of extending the gripping element in the third axis towards the first location may comprise lowering the gripping element in the vertical direction. Similarly, the step of retracting the gripping element in the third axis away from the first location may comprise raising the gripping element in the vertical direction.

In some examples, the machine comprises an input conveyor at the first location. The input conveyor may comprise a conveyor belt which is movable in the first axis. The input conveyor can be used to load the plug into the first location. In some embodiments, an input conveyor is not provided.

Optionally, the machine comprises an output conveyor at the second location. The output conveyor may comprise a conveyor belt which is movable in the first axis. The output conveyor can be used to unload the plug from the second location. In some examples, the wrapping may be arranged on the output conveyor. When the plug is placed onto the wrapping, the output conveyor may be operated to move the plug on the wrapping along in the first axis. The wrapping can then be wrapped around the plug.

Optionally, the gripping element further comprises a pushing block. The pushing block may be used to push the plug in the second axis when at the first location. The gripping element may comprise a guide for the plurality of fingers. The guide guides the fingers to move between an open and closed configuration. The pushing block may be connected to the guide. The pushing block may be arranged at a location aligned in the third axis with a location of the tips of the fingers when in the open configuration. The pushing block may be arranged at a location retracted in the third axis (e.g. higher) than the tips of the fingers in the closed configuration. Accordingly, the pushing block avoids interference with the plug when the fingers are in the closed configuration.

Optionally, the gripping element further comprises a pushing block, and wherein the transplanting further comprises translating the gripping element in the second axis after the extending the gripping element towards the first location and before the closing the plurality of fingers to grip the plug of *Sphagnum,* in order to cause the pushing block to push the plug of *Sphagnum* in the second axis to partially tilt the plug of *Sphagnum.* For example, the pushing block may tilt the plug of *Sphagnum.*

Optionally, the transplanting further comprises translating the gripping element in the second axis after the extending the griping element towards the first location and before the closing the plurality of fingers to grip the plug of *Sphagnum.* In other words, the gripping element may be translated in the second axis when the plug is at the first location. This can be used to position the fingers offset from the first location. Preferably the extending the gripping element towards the first location comprises extending the gripping element so that the plurality of fingers are partially inserted into the plug. The gripping element can then be translated in the second axis. This pulls the top of the plug in the second axis. This slightly angles the plug relative to the first orientation (e.g. upright). This is useful because when the pushing element subsequently pushes the plug, the plug is already oriented at an angle in the second axis, which makes the pushing easier. Preferably, the direction of the translating in the second axis is the same as the direction of the pushing. Similarly with the movement of the pushing element being effected by the gripping element, by tilting the plug by moving the gripping element in this manner, the tilting can be achieved efficiently without an external mechanism.

In such cases, the plug may be arranged at third orientation prior to the movement (for example upright), and moved into the first orientation by the translation of the gripping element in the second axis.

In some examples, the fingers are arranged within or above the pushing block when in the open configuration. This allows the fingers to be clear to avoid interference with the plug.

Optionally, the translating of the gripping element in the second axis after the extending the griping element towards the first location and before the closing the plurality of fingers to grip the plug of *Sphagnum* causes the pushing block to push the plug of *Sphagnum* in the second axis to tilt the plug of *Sphagnum.* The block may be used to push the plug in the second axis before closing the fingers. This provides a larger area than the fingers alone.

In some examples, the pushing block is used to push the plug in the second axis at the first location. The pushing block may be coupled to the gripping element so that movement of the gripping element moves the pushing block. The gripping element may be moved in the second axis, away from the first location towards the second location. During this movement, the pushing block may push the plug to partially tilt it in the first location. This provides a large surface area for contacting the plug. The partial tilting makes it easier to push the plug over at the second location by the pushing element. As the pushing block is coupled to the gripping element, the same movement mechanism can be used to push the plug, thereby simplifying the design and avoiding the need for an external mechanism.

In this way, the pushing of the plug in the second axis before closing the fingers is achieved by moving the gripping element. This further makes the tilting more efficient because it avoids the need for an external mechanism to tilt the plug. The tilting before the closing of the fingers allows the plug to be partially tilted, making the pushing over of the plug by the pushing element easier. The pushing element may then push the plug into the second orientation from the first orientation.

The pushing block (e.g. at least part of, preferably a lowest portion thereof) may be arranged at a height of between 1 cm and 10 cm from an upper surface of a plug tray when the gripping element is moved in the second axis at the first location, preferably between 2 cm and 5 cm. This ensures the pushing element engages the plug.

In some examples, the translating in the second axis comprises a magnitude of less than 5 cm. This ensures that the plug is only partially tilted and not fully tilted over. This also ensures that the plurality of fingers is positioned ready to close and grip the plug.

Optionally, the transplanting further comprises retracting the gripping element in the third axis away from the second location after the opening of the plurality of fingers and before the pushing of the plug of *Sphagnum.* This allows the plurality of fingers to be raised out of the way of the plug so that the pushing element can push the plug without the fingers interfering. In some examples, the retracting of the gripping element is not required because the fingers are clear of the plug when in the open configuration.

Optionally, the gripping element comprises a guide for guiding the plurality of fingers to move between an open configuration and a closed configuration, wherein each finger of the plurality of fingers comprises a portion along a length of the finger, wherein the portion is arranged at an angle relative to the third axis, wherein the portion is arranged to move through the guide to reduce a separation between the fingers in the closed configuration relative to the open configuration. The fingers may pass through the guide and the angled portion forces the fingers together as they pass through the guide. This reduces the separation between the tips of the fingers. The guide may be attached to the pushing block.

Optionally, the gripping element comprises a guide for guiding the plurality of fingers to move between an open configuration and a closed configuration, wherein each finger of the plurality of fingers comprises an angled portion along a length of the finger, wherein the angled portion is arranged to move through the guide to reduce a separation between the fingers in the closed configuration relative to the open configuration.

Optionally, the portion has a length of at least 15 mm. In some examples, the portion has a length of at least 5 mm, preferably at least 10 mm, more preferably at least 15 mm. This provides a desired separation between the fingers. Preferably, the separation between tips of the fingers (e.g. in the closed configuration) is less than 20 mm, more preferably less than 10 mm, even more preferably less than 5 mm.

Optionally, the machine comprises a plurality of gripping elements, each gripping element of the plurality of gripping elements for gripping a respective plug of a plurality of plugs of *Sphagnum,* and each gripping element comprising a plurality of fingers; and a plurality of pushing elements for pushing the plurality of plugs of *Sphagnum,* wherein each pushing element is coupled to a respective gripping element of the plurality of gripping elements and is operable by moving the respective gripping element; wherein the actuator is configured to operate the plurality of gripping elements to transplant the plurality of plugs of *Sphagnum* from a plurality of first locations to a plurality of second locations; and wherein the actuator is configured to operate the plurality of pushing elements to push the plurality of plugs of *Sphagnum* to tilt the plurality of plugs of *Sphagnum* from a first orientation to a second orientation at the plurality of second locations comprising translating the plurality of gripping elements to translate the plurality of pushing elements, wherein the translating causes the plurality of pushing elements to push the plurality of plugs of *Sphagnum* over at the plurality of second locations to tilt the plurality of plugs of *Sphagnum* into the second orientation.

Optionally, the machine comprises a plurality of gripping elements, each gripping element of the plurality of gripping elements for gripping a respective plug of a plurality of plugs of *Sphagnum,* and each gripping element comprising a plurality of fingers; and a plurality of pushing elements for pushing the plurality of plugs of *Sphagnum,* wherein each pushing element is coupled to a gripping element of the plurality of gripping elements and is operable by moving the respective gripping element; wherein the actuator is configured to operate the plurality of gripping elements to transplant the plurality of plugs of *Sphagnum* from a plurality of first locations to a plurality of second locations; and wherein the actuator is configured to operate the plurality of pushing elements to push the plurality of plugs of *Sphagnum* to tilt the plurality of plugs of *Sphagnum* from a first orientation to a second orientation at the plurality of second locations.

Each of the plurality of gripping elements may have one or more features of the gripping element described herein.

In some examples, each of the plurality of fingers comprises a first portion, a second portion, and a third portion, wherein the third portion comprises a tip of the finger, wherein the second portion is arranged between the first portion and the second portion, and wherein the second portion is at an angle relative to the first portion and the second portion. In some examples, the second portion is angled towards a centre of the plurality of fingers. For example, the centre may be in the first plane. In some examples, the second portion allows the fingers to move together.

In some examples, the second portion has a length of at least 10 mm, preferably at least 15 mm. This allows the fingers to move together enough to bring the tips nearly together. In conventional plug transplanting machines, such as the Urbinati RW16, the second portion has a length of around 5 mm. This is provided to ensure that the fingers do not over-grip the plug plant. As the growing media and root bundle is often firm, only a small gripping force is needed. However, in the machine of the present disclosure, the fingers grip *Sphagnum* strands and not growing media, and therefore a larger gripping force is needed. To ensure sufficient gripping, the longer second portion allows the tips of the fingers to move closer together and better grip the plug. Accordingly, the machine is adapted for transplanting plugs of *Sphagnum.*

In some examples, the machine comprises at least four gripping elements, preferably at least eight gripping elements. The machine may alternatively comprise sixteen, thirty-two, or even more gripping elements. With more gripping elements, the machine is larger and more expensive, but can transplant more plugs at the same time.

Optionally, the machine further comprises a processor configured to control the actuator. The processor may comprise software to control the actuator. The processor may control the actuator to control the gripping element and thereby the pushing element. The processor may send instructions to the actuator to effect the required movement. The processor may be programmable by a user.

In some examples, the machine further comprises a user interface for programming the processor. For example, the user interface may comprise a touch screen for controlling operation of the machine. For instance, routines may be set through the user interface. For example, a routine may comprise the steps of the method performed by the machine of the first aspect. The processor may then perform this routine by sending instructions to the actuator. The actuator may control the gripping element to transplant the plug accordingly.

In some examples, the plug of *Sphagnum* has a width of less than 5 cm. For example, the width may be the width in the first and/or the second axis when the plug is arranged upright. In some examples, the plug of *Sphagnum* has a width of between 2.5 cm and 5 cm.

In some examples, the plug of *Sphagnum* has a length of less than 10 cm. For example, the length may be the length in the third axis when the plug is arranged upright. In some examples, the plug of *Sphagnum* has a length of between 5 cm and 10 cm. The length is preferably larger than the width.

In some examples, the machine further comprises a support for assisting removal of the plug of *Sphagnum* from the plug tray. The support may be used to push against the plug tray to help remove the plug from the plug tray. The support may be arranged towards the second side of the gripping element in the second axis. In particular, the support may be arranged on the side of the gripping element towards the second location relative to the first location.

In some examples, the actuator is configured to operate the support to push against the plug tray to assist removal of the plug of *Sphagnum* from the plug tray. The actuator may therefore control movement of the support in addition to the gripping element.

In some examples, the support is operable concurrently with raising the gripping element. The support may be used to push against the plug tray as the gripping element is moved in the third axis away from the first location. This allows the support to provide a retaining force on the plug tray to assist removal of the plug from the tray.

In some examples, the support is configured to push against other plugs in the plug tray. Conventionally, a support may be used to hold an empty tray still while a plug plant is removed by a gripping element. However, in the machine of the present disclosure, the support has been adapted to push against plugs in the plug tray that have not been transplanted yet. Thus, the support acts on a portion of the tray which has not yet been transplanted. This aids removal of the plug from adjacent plugs where strands may have become tangled.

In some examples, the tilting is performed after the opening of the plurality of fingers. In this case, the pushing element pushes the plug after the fingers have been opened.

In some examples, the second orientation is at an angle of at least 45° relative to the first orientation. For example, the angle may be at least 60°, preferably at least 75°, more preferably between 75° to 105°. In some examples, the second orientation is substantially perpendicular to the first orientation. For example, the second orientation may be perpendicular to the first orientation.

In some examples, the plug of *Sphagnum* is arranged in the first orientation at the first location.

In some examples, the pushing element is attached to a plurality of gripping elements. Accordingly, a single pushing element can be used to push a plurality of plugs. For instance, a bar extending in the first axis may be used to push over a plurality of plugs.

In some examples, the plurality of fingers comprises at least two fingers, preferably at least three fingers, more preferably five fingers.

According to a second aspect of the present disclosure, there is provided: a horticultural plug transplanting machine adapted for transplanting *Sphagnum,* comprising:
a gripping element for gripping a plug of *Sphagnum,* wherein the gripping element comprises a plurality of fingers;
an actuator for operating the gripping element; and
a pushing element for pushing the plug of *Sphagnum,* wherein the pushing element is coupled to the gripping element and is operable by moving the gripping element;
wherein the actuator is configured to operate the gripping element to transplant the plug of *Sphagnum* from a first location to a second location, comprising:
   translating the gripping element in a first plane, the first plane comprising a first axis and a second axis, to a position aligned with the first location along a third axis, wherein the third axis is perpendicular to the first axis and the second axis;
   extending the gripping element in the third axis towards the first location;
   closing the plurality of fingers to grip the plug of *Sphagnum* at the first location;
   retracting the gripping element in the third axis away from the first location;
   translating the gripping element in the first plane to a position aligned with the second location along the third axis;
   extending the gripping element in the third axis towards the second location;
   opening the plurality of fingers to release the plug of *Sphagnum* at the second location; and
wherein the actuator is configured to operate the pushing element to push the plug of *Sphagnum* to tilt the plug of *Sphagnum* from a first orientation to a second orientation at the second location, comprising:
   translating the gripping element in the second axis in order to translate the pushing element in the second axis, wherein the translating causes the pushing element to push the plug of *Sphagnum* over at the second location to tilt the plug of *Sphagnum* into the second orientation.

Features of other aspects may readily be applied to this aspect and vice versa. For instance, features of the first aspect and optional features described in relation to the first aspect may readily be applied to the second aspect and vice versa.

According to a third aspect of the present disclosure, there is provided: a horticultural plug transplanting machine adapted for transplanting *Sphagnum,* comprising:
a gripping element for gripping a plug of *Sphagnum,* wherein the gripping element comprises a plurality of fingers; and
an actuator for operating the gripping element;
wherein the actuator is configured to operate the gripping element to transplant the plug of *Sphagnum* from a first location to a second location, comprising:
   translating the gripping element in a first plane, the first plane comprising a first axis and a second axis, to a position aligned with the first location along a third axis, wherein the third axis is perpendicular to the first axis and the second axis;
   extending the gripping element in the third axis towards the first location;
   closing the plurality of fingers to grip the plug of *Sphagnum* at the first location;
   retracting the gripping element in the third axis away from the first location;
   translating the gripping element in the first plane to a position aligned with the second location along the third axis;
   extending the gripping element in the third axis towards the second location;
   opening the plurality of fingers to release the plug of *Sphagnum* at the second location; and
wherein the machine is configured to tilt the plug of *Sphagnum* from a first orientation at the first location to a second orientation at the second location, wherein the tilting is performed about the first axis.

In some examples, the machine comprises pushing means for pushing the plug of *Sphagnum* over at the second location to tilt the plug of *Sphagnum* into the second orientation.

In some examples, the pushing means comprises a pushing element, and wherein the actuator is configured to operate the pushing element to engage and push the plug of *Sphagnum* over at the second location to tilt the plug of *Sphagnum* into the second orientation. In some examples, the pushing element may be coupled to the gripping element. In other examples, the pushing element may be independently movable relative to the gripping element. In other words, the pushing element may be moved without moving the gripping element.

Features of other aspects may readily be applied to this aspect and vice versa. For instance, features of the first aspect may readily be applied to the third aspect.

According to a fourth aspect of the present disclosure, there is provided: a horticultural plug transplant machine adapted for transplanting *Sphagnum,* wherein the machine is configured to transplant a plug of *Sphagnum* from a first location to a second location, and wherein the machine is configured to rotate the plug of *Sphagnum* from a first orientation at the first location to a second orientation at the second location, wherein the second orientation is different from the first orientation.

In some examples, the pushing element may be coupled to the gripping element. In other examples, the pushing element may be independently movable relative to the gripping element. In other words, the pushing element may be moved without moving the gripping element.

Features of other aspects may readily be applied to this aspect and vice versa. For instance, features of the first aspect may readily be applied to the fourth aspect. For instance, the steps of the translation of the gripping element may readily be applied to the fourth aspect.

According to a fifth aspect of the present disclosure, there is provided: a method of operating a horticultural plug transplanting machine adapted for transplanting *Sphagnum,* the machine comprising a gripping element for gripping a plug of *Sphagnum,* the gripping element comprising a plurality of fingers, the machine further comprising an actuator for operating the gripping element, and the machine further comprising a pushing element for pushing the plug of *Sphagnum,* wherein the pushing element is coupled to the gripping element and is operable by moving the gripping element, the method comprising:
transplanting the plug of *Sphagnum* from a first location to a second location by the actuator operating the gripping element; and
pushing the plug of *Sphagnum* to tilt the plug of *Sphagnum* from a first orientation to a second orientation at the second location by the actuator operating the pushing element by translating the gripping element to translate the pushing element, wherein the translating causes the pushing element to push the plug of *Sphagnum* over at the second location to tilt the plug of *Sphagnum* into the second orientation.

Optionally, the method further comprises providing and operating the machine according to the first aspect. In particular, the method of the fifth aspect may comprise providing and operating the machine according to any optional feature described in relation to the first aspect. Features described in relation to the machine of the first to fourth aspects may readily be applied to the fifth aspect in method form. For instance, the gripping element being configured for movement to tilt the plug at the first location before closing the fingers described in relation to the first aspect may be provided in the fifth aspect as the method comprising moving the gripping element to tilt the plug at the first location before closing the fingers. Other features described in relation to the machine of the first to fourth aspects may be implemented as method features of the fifth aspect, or the method of the fifth aspect may optionally comprise operating such a machine.

According to a sixth aspect of the present disclosure, there is provided: a method of operating a horticultural plug transplanting machine adapted for transplanting *Sphagnum,* the machine comprising a gripping element for gripping a plug of *Sphagnum,* the gripping element comprising a plurality of fingers, the machine further comprising an actuator for operating the gripping element, and the machine further comprising a pushing element for pushing the plug of *Sphagnum,* wherein the pushing element is coupled to the gripping element and is operable by moving the gripping element, the method comprising:
transplanting the plug of *Sphagnum* from a first location to a second location, comprising:
   translating the gripping element in a first plane, the first plane comprising a first axis and a second axis, to a position aligned with the first location along a third axis, wherein the third axis is perpendicular to the first axis and the second axis;
   extending the gripping element in the third axis towards the first location;
   closing the plurality of fingers to grip the plug of *Sphagnum* at the first location;
   retracting the gripping element in the third axis away from the first location;
   translating the gripping element in the first plane to a position aligned with the second location along the third axis;
   extending the gripping element in the third axis towards the second location;
   opening the plurality of fingers to release the plug of *Sphagnum* at the second location; and
pushing the plug of *Sphagnum* to tilt the plug of *Sphagnum* from a first orientation to a second orientation at the second location, comprising:
   translating the gripping element in the second axis in order to translate the pushing element in the second axis, wherein the translating causes the pushing element to push the plug of *Sphagnum* over at the second location to tilt the plug of *Sphagnum* into the second orientation.

Features of other aspects may readily be applied to this aspect and vice versa. For instance, features of the first aspect or the fifth aspect may readily be applied to the sixth aspect.

According to a seventh aspect of the present disclosure, there is provided: a computer program, computer program product, or computer-readable medium comprising instructions which, when executed by a processor, cause the processor to perform the method according to the fifth or sixth aspect.

Features of other aspects may readily be applied to this aspect and vice versa. For instance, features of the first aspect may readily be applied to the seventh aspect. For example, the computer program, computer program product, or computer-readable medium of the seventh aspect may comprise instructions for operating optional features of the first aspect.

According to an eighth aspect of the present disclosure, there is provided: a gripping element for gripping a plug of *Sphagnum,* comprising: a plurality of fingers movable, in use, between an open configuration and a closed configuration for gripping the plug of *Sphagnum;* and a pushing element for pushing the plug of *Sphagnum.* The gripping element may be configured for use in a horticultural transplanting machine, such as one adapted for transplanting *Sphagnum.*

In some examples, the pushing element comprises a flexible flap for engaging the plug. In some examples, the pushing element comprises an arm and a flexible flap. The flexible flap may be configured to push the plug of *Sphagnum.* The arm may be connected to a main body of the gripping element. The pushing element may be separate from the plurality of fingers. The pushing element may be arranged at a position such that movement of the gripping element after moving the plurality of fingers from a closed configuration to an open configuration causes the pushing element to push the plug (for example, whilst the plurality of fingers in the open configuration are clear of the plug).

In some examples, the gripping element comprises a guide for guiding the plurality of fingers to move between an open configuration and a closed configuration. In some examples, each finger of the plurality of fingers comprises a portion along a length of the finger, wherein the portion is arranged at an angle relative to the third axis. In some examples, the portion is arranged to move through the guide to reduce a separation between the fingers in the closed configuration relative to the open configuration. In some examples, the portion has a length of at least 15 mm.

In some examples, the gripping element further comprises a pushing block. In some examples, the pushing block is configured to push the plug of *Sphagnum.* In some examples, the pushing block is attached to the guide. For example, the pushing block may be arranged at one side of the guide, for example the side of the guide which is closer to the tips of the fingers when in the closed configuration.

Features of other aspects may readily be applied to this aspect and vice versa. For instance, features of the first aspect may readily be applied to the eighth aspect. For example, features of the gripping element, the plurality of fingers, the pushing element, the guide, and/or the pushing block described in relation to the first aspect may be applied to the eighth aspect. It will be appreciated that the gripping element of the first aspect may be applied independently and may be provided in isolation of other parts of the machine, such as in the eighth aspect.

According to a ninth aspect of the present disclosure, there is provided: a horticultural plug transplanting machine adapted for transplanting a bryophyte, comprising:
a gripping element for gripping a plug of a bryophyte, wherein the gripping element comprises a plurality of fingers;
an actuator for operating the gripping element; and
a pushing element for pushing the plug of the bryophyte, wherein the pushing element is coupled to the gripping element and is operable by moving the gripping element;
wherein the actuator is configured to operate the gripping element to transplant the plug of a bryophyte from a first location to a second location, comprising:
   translating the gripping element in a first plane, the first plane comprising a first axis and a second axis, to a position aligned with the first location along a third axis, wherein the third axis is perpendicular to the first axis and the second axis;
   extending the gripping element in the third axis towards the first location;
   closing the plurality of fingers to grip the plug of the bryophyte at the first location;
   retracting the gripping element in the third axis away from the first location;
   translating the gripping element in the first plane to a position aligned with the second location along the third axis;
   extending the gripping element in the third axis towards the second location;
   opening the plurality of fingers to release the plug of the bryophyte at the second location; and
wherein the actuator is configured to operate the pushing element to push the plug of the bryophyte to tilt the plug of the bryophyte from a first orientation to a second orientation at the second location, comprising:
   translating the gripping element in the second axis in order to translate the pushing element in the second axis, wherein the translating causes the pushing element to push the plug of the bryophyte over at the second location to tilt the plug of the bryophyte into the second orientation.

It is preferable that the plug does not comprise roots. In some examples, the bryophyte comprises a moss. In some examples, the moss may not comprise rhizoids. As such, the plug may be transplanted using the machine. In some examples, the bryophyte comprises *Sphagnum,* such as in other aspects. Features of other aspects may readily be applied to this aspect and vice versa. For instance, features of the first aspect may readily be applied to the ninth aspect.

Aspects of the present disclosure may be provided in conjunction with each other and features of one aspect may be applied to other aspects. Any feature in one aspect of the present disclosure may be applied to other aspects of the present disclosure, in any appropriate combination. In particular, specific movements of the gripping element may be applied to the various examples and aspects disclosed, and a disclosure of a particular example (e.g. of a feature of the gripping element or pushing element) in one aspect may be applied to other aspects. It should also be appreciated that particular combinations of the various features described and defined in any aspects of the present disclosure can be implemented and/or supplied and/or used independently. Embodiments related to the machine may be applied to the method, and *vice versa.*

Other definitions of terms may appear throughout the specification. Before the exemplary embodiments are described in more detail, it is to be understood that this disclosure is not limited to particular embodiments described, and as such may vary. It is also to be understood that the terminology used herein is for the purpose of describing particular embodiments only, and is not intended to be limiting, since the scope of the present disclosure will be defined only by the appended claims.

Where a range of values is provided, it is understood that each intervening value, to the tenth of the unit of the lower limit unless the context clearly dictates otherwise, between the upper and lower limits of that range is also specifically disclosed. Each smaller range between any stated value or intervening value in a stated range and any other stated or intervening value in that stated range is encompassed within this disclosure. The upper and lower limits of these smaller ranges may independently be included or excluded in the range, and each range where either, neither or both limits are included in the smaller ranges is also encompassed within this disclosure, subject to any specifically excluded limit in the stated range. Where the stated range includes one or both of the limits, ranges excluding either or both of those included limits are also included in this disclosure.

Embodiments of the present disclosure are described below, by way of example only, with reference to the accompanying Figures and Examples.
**Figure 1** shows a machine according to a first embodiment, wherein the machine is in an initial configuration.
**Figure 2** shows the machine of Figure 1, after a first step of a transplanting method.
**Figure 3** shows the machine of Figure 2, after a second step of the transplanting method.
**Figure 4** shows the machine of Figure 3, after a third step of the transplanting method.
**Figure 5** shows the machine of Figure 4, after a fourth step of the transplanting method.
**Figure 6** shows the machine of Figure 5, after a fifth step of the transplanting method.
**Figure 7** shows the machine of Figure 6, after a sixth step of the transplanting method.
**Figure 8** shows the machine of Figure 7, after a seventh step of the transplanting method.
**Figure 9** shows the machine of Figure 8, during an eighth step of the transplanting method.
**Figure 10** shows the machine of Figure 9, after the eighth step of the transplanting method.
**Figure 11** shows a machine according to a second embodiment, after a third step of the transplanting method.
**Figure 12** shows a machine according to a second embodiment, after a seventh step of the transplanting method.
**Figure 13** shows a machine according to a third embodiment, after a second step of the transplanting method.
**Figure 14** shows a machine of Figure 13, after a third step of the transplanting method.
**Figure 15** shows a machine according to a fourth embodiment, after a third step of the transplanting method.
**Figure 16** shows a machine of Figure 16, after a fourth step of the transplanting method.
**Figure 17A** shows a gripping element of a conventional machine in an open configuration.
**Figure 17B** shows the gripping element of Figure 17A in a closed configuration.
**Figure 18A** shows a gripping element of a machine according to a fifth embodiment in an open configuration.
**Figure 18B** shows the gripping element of Figure 18A in a closed configuration.
**Figure 19** shows a finger of the gripping element of Figures 17A and 17B and a finger of the gripping element of Figures 18A and 18B.
**Figure 20A** shows a guide of the gripping element of Figures 17A and 17B and a guide of the gripping element of Figures 18A and 18B.
**Figure 20B** shows the guides of Figure 20A.

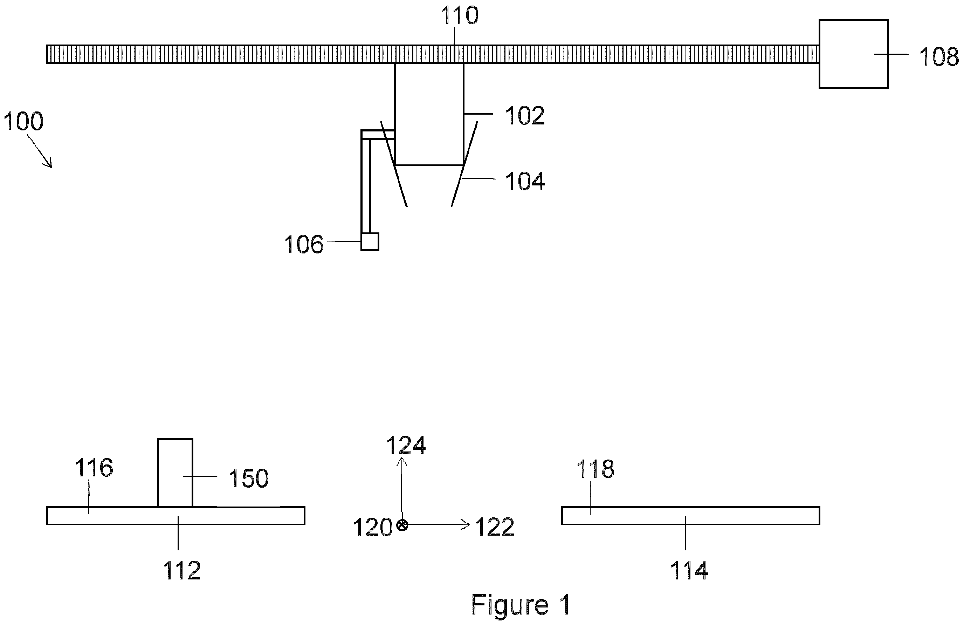

Referring to Figure 1, according to a first embodiment of the present disclosure, a machine 100 is provided. The machine 100 is a horticultural transplanting machine adapted for transplanting *Sphagnum.* The machine 100 comprises a gripping element 102. The gripping element 102 has a main body. The main body is indicated by a rectangular unit in Figure 1.

The gripping element 102 comprises a plurality of fingers 104. In the first embodiment, there are two fingers 104. In other examples, more than two fingers 104 may be provided. For instance, three fingers 104 or four fingers 104 or more may instead be provided. The fingers 104 are connected to the main body of the gripping element 102. The fingers 104 are movable relative to the main body of the gripping element 102. The fingers 104 are arranged at an angle. In particular, the fingers 104 taper towards each other at their tips.

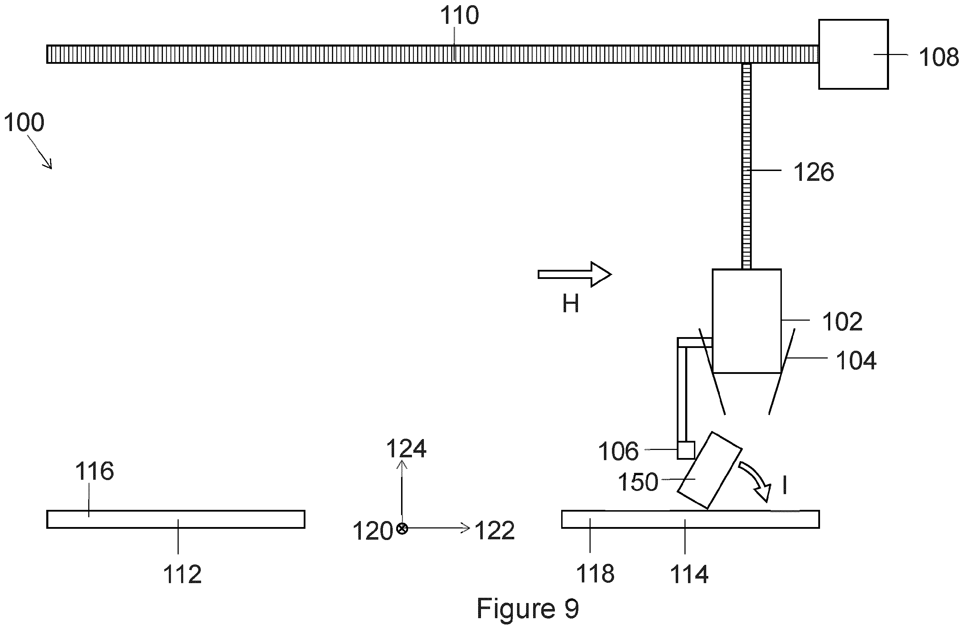

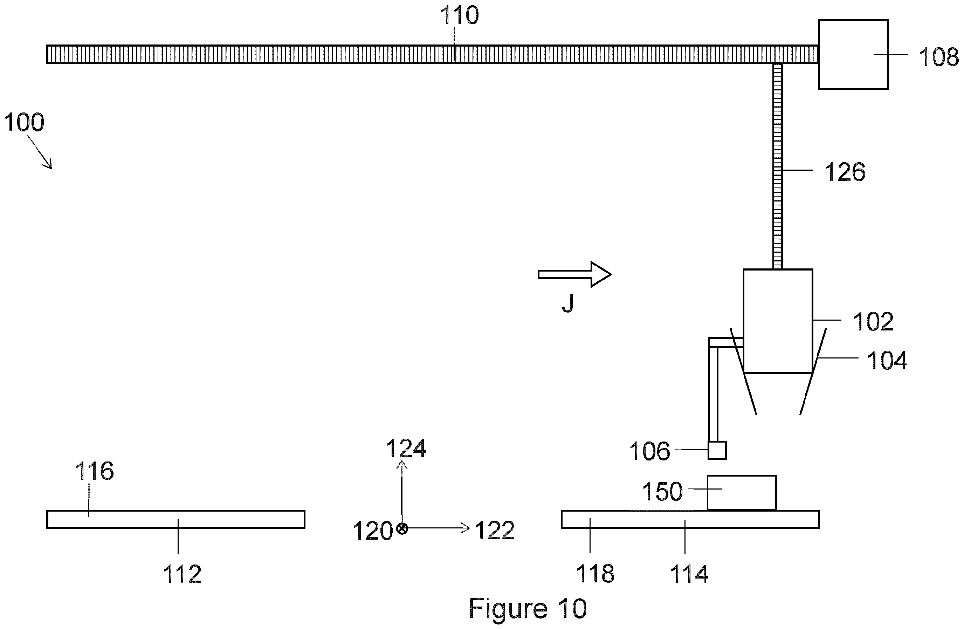

The machine 100 also comprises a pushing element 106. The pushing element 106 is attached to the main body of the gripping element 102. The pushing element 106 may be referred to as part of the gripping element 102. The pushing element 106 will be described in more detail in relation to Figures 9 and 10. The pushing element has an arm connected to the main body of the gripping element 102 and a pusher at the end of the arm.

The machine 100 further comprises an actuator 108. The machine 100 also comprises a rail 110. In Figure 1, the actuator 108 is shown adjacent an end of the rail 110 for illustrative purposes.

The actuator 108 is communicatively coupled to the gripping element 102. In particular, the actuator 108 is electrically connected to the gripping element 102. The actuator 108 is configured to control operation of the gripping element 102. In particular, the actuator 108 is configured to send instructions to control movement of the gripping element 102. In the first embodiment, the machine 100 comprises a control cable connected between the gripping element 102 and the actuator 108. The actuator 108 is configured to send signals along the control cable to the gripping element 102 to cause the gripping element 102 to move. In the first embodiment, the control cable is connected to a motor in the gripping element 102. For instance, the gripping element 102 comprises a motor in the main body. The actuator 108 is configured to control the motor via the control cable to operate the gripping element 102.

Figure 1 shows a first location 112 and a second location 114. The first location 112 is shown towards the bottom left of Figure 1. The second location 114 is shown towards the bottom right of Figure 1.

The machine 100 comprises an input conveyor 116. The input conveyor 116 includes a conveyor belt. The first location 112 is arranged on the input conveyor 116.

The machine 100 comprises an output conveyor 118. The output conveyor 118 includes a conveyor belt. The second location 114 is arranged on the output conveyor 118.

Figure 1 shows a plug 150. The plug 150 is a plug of *Sphagnum.* The plug 150 is arranged at the first location 112. In the first embodiment, the plug 150 is arranged on the input conveyor 116. Figure 1 shows the plug 150 resting on the upper surface of the conveyor belt of the input conveyor 116. In other embodiments, the plug 150 may be arranged within a tray, such as a plug tray. The position of the plug 150 may be changed by moving the input conveyor 116. For example, the plug 150 can be loaded into the first location 112 by moving the input conveyor 116.

In other examples, the first location 112 does not comprise an input conveyor 116. For example, the first location 112 may be a static location where loading of the plug 150 to the first location 112 is performed manually.

Figure 1 shows a set of axes. A first axis 120 is arranged into the page of Figure 1 (extending in the axis between out of the page and into the page). In the first embodiment, the first axis 120 is horizontal. A second axis 122 is arranged towards the right hand side of Figure 1 (extending in the axis between the left of the page and the right of the page). The second axis 122 is perpendicular to the first axis 120. In the first embodiment, the second axis 122 is horizontal. A third axis 124 is arranged towards the top of Figure 1 (extending in the axis between the bottom of the page and the top of the page). The third axis 124 is perpendicular to the first axis 120 and the second axis 122. In the first embodiment, the third axis 124 is vertical. The first axis 120 and the second axis 122 together form a first plane. In the first embodiment, the first plane is horizontal. Figure 1 therefore shows a cross section of the machine 100 from the side.

The set of axes indicates a first direction of the axes. In particular, a first direction of the first axis 120 is shown into the page. A second direction of the first axis 120 is out of the page. A first direction of the second axis 122 is to the right. A second direction of the second axis 122 is to the left. A first direction of the third axis 124 is upwards. A second direction of the third axis 124 is downwards. The second directions of an axis are opposite to the respective first directions.

The input conveyor 116 is arranged to extend in the first axis 120. In other words, the input conveyor 116 has a length which extends in the first axis 120. The input conveyor 116 has a width which extends in the second axis 122. Therefore, the upper surface of the input conveyor 116 is arranged in the first plane. The input conveyor 116 is arranged to move in the first axis 120. Although not shown in Figure 1, the input conveyor 116 is arranged around rollers, and the input conveyor 116 thereby forms a conveyor loop, the upper portion of which is shown in Figure 1. The input conveyor 116 can be moved in the first direction of the first axis 120 into the page to move the plug 150 to the first location 112.

The output conveyor 118 is arranged to extend in the first axis 120. In other words, the output conveyor 118 has a length which extends in the first axis 120. The output conveyor 118 has a width which extends in the second axis 122. Therefore, the upper surface of the output conveyor 118 is arranged in the first plane. The output conveyor 118 is arranged to move in the first axis 120. Although not shown in Figure 1, the output conveyor 118 is arranged around rollers, and the output conveyor 118 thereby forms a conveyor loop, the upper portion of which is shown in Figure 1.

The rail 110 is shown extending in the second axis 122. The rail 110 allows the gripping element 102 to move along the rail 110 in the second axis 122. The machine also comprises a second rail (not shown) which extends in the first axis 120 into the page of Figure 1. This allows the gripping element 102 to move in the first axis 120 in a similar manner to how the rail 110 allows movement in the second axis 122. The second rail is connected to the rail 110 to permit movement of the second rail relative to the rail 110. In particular, the second rail can move with the gripping element 102 in the first axis 120 relative to the rail 110. The machine 100 also permits movement of the gripping element 102 in the third axis 124 as will be described below.

In the first embodiment, the rail 110 comprises a linear actuator. In particular, the rail 110 comprises a linear gear or rack. Correspondingly, the gripping element 102 comprises a circular gear or pinion which engages the linear gear of the rail 110. Therefore, the gripping element 102 and the rack 110 form a rack and pinion arrangement. In other examples, other linear actuators may be used. For instance, the rail 110 may have an arrangement similar to a lead screw. In other examples, other mechanisms may be used to permit movement of the gripping element 102 relative to the rail 110.

The gripping element 102 is operable to move over the rail 110. In other words, the gripping element 102 can move along the rail 110 in the first axis 120 and the second axis 122. In this manner, the gripping element 102 can move to a desired location within the first plane. The actuator 108 is configured to operate the gripping element 102. The actuator 108 is configured to move the gripping element 102 along the rail 120. In the first embodiment, the actuator 108 is configured to control movement of the gripping element 102 along the rail 110 by providing power to motors in the main body of the gripping element 102. These motors cause movement of the circular gear of the gripping element 102 relative to the linear gear of the rail 110 to cause movement of the gripping element 102 along the rail 110.

Figure 1 shows the machine 100 in an initial configuration. The gripping element 102 is arranged towards the top centre of Figure 1 for exemplary purposes only. In other embodiments, the gripping element 102 may be arranged at other locations.

The input conveyor 116 is used to input the plug 150 for transplanting. In the first embodiment, the plug 150 is initially placed onto the input conveyor 116 at a location which is arranged in the first axis 120 out of the page in Figure 1. The input conveyor 116 is operated to move the conveyor belt in the first axis 120 in the first direction of the first axis 120 into the page of Figure 1. This moves the plug 150 in the first direction of the first axis 120 into the page of Figure 1. The movement of the input conveyor 116 is then stopped when the plug 150 reaches the first location 112. In this manner, the plug 150 is fed into the first location 112 by the input conveyor 116. This allows the plug 150 to be loaded from a different location. This separates the position of loading from the position of transplanting. When the plug 150 is loaded by hand, this improves safety because the loading of the plug 150 into the input conveyor 116 can be separated from the gripping of the plug 150 by the gripping element 102. Moreover, because the loading is separated, the efficiency can be improved because the gripping element 102 does not need to wait for individual loading each time, and instead the input conveyor 116 can be used to load multiple plugs 150 in a row. The input conveyor 116 could instead be operated in the opposite direction in the first axis 120, out of the page of Figure 1, or could be absent and the plug 150 loaded by hand.

Figure 1 shows the plug 150 arranged in the first location 112 after movement of the input conveyor 116 to move the plug 150 in the first axis 120 to the first location 112. The plug 150 is arranged in a first orientation. The first orientation is upright. The plug 150 is arranged generally vertically so that its length is arranged aligned with the third axis 124. The length is greater than the width in the second axis 122 or the first axis 120. The plug 150 is thus elongate. The strands of *Sphagnum* are generally arranged along the length of the plug 150. Therefore, the strands of *Sphagnum* are generally arranged upright in the first orientation.

The upright first orientation is a growing orientation, where the strands of *Sphagnum* typically grow upwards to form a plug 150 in the first orientation.

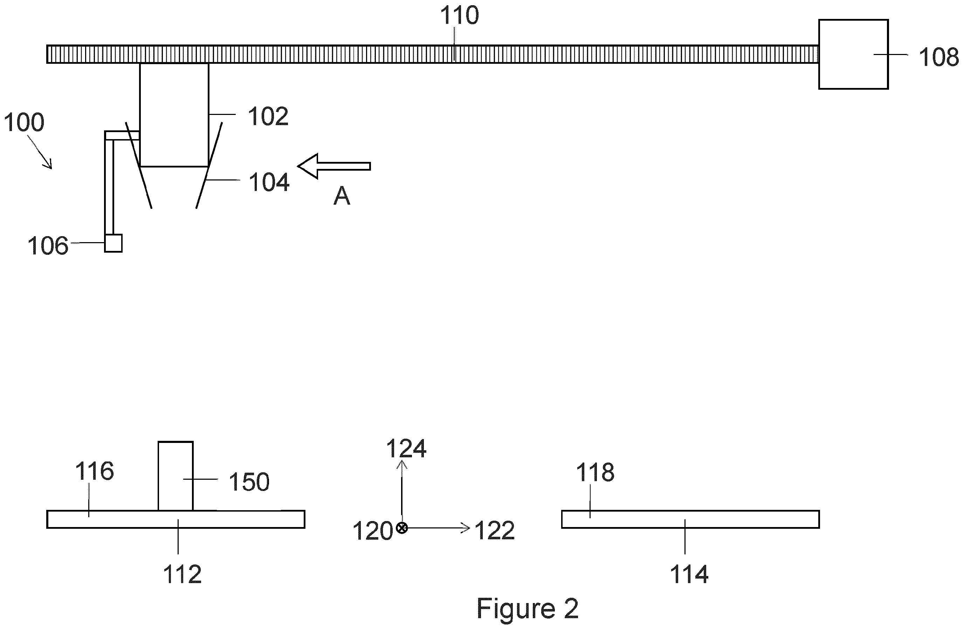

Referring to Figure 2, the machine 100 of the first embodiment is shown after a first step of a transplanting method. The machine 100 of Figure 2 is the same as the machine 100 of Figure 1. Figure 2 shows the machine 100 with the gripping element 102 moved in the second axis 122 towards the top left of Figure 2.

In use, the machine 100 is operated to move the gripping element 102. The actuator 108 is configured to operate the movement of the gripping element 102 along the rail 110. As shown in Figure 2, Arrow A indicates a direction of movement of the gripping element 102 in the second axis 122 towards the left of Figure 2. The gripping element 102 thus moves in the second axis 122. In particular, the gripping element 102 is moved in the second direction of the second axis 122 which is towards the left. The second direction of the second axis 122 is the direction towards the first location 112 from the second location 114. The gripping element 102 is therefore moved from the position shown in Figure 1 in the direction of Arrow A to the position shown in Figure 2. In the first embodiment, this movement in the second axis 122 is horizontal (and left). In other embodiments, the movement indicated by Arrow A may also include movement in the first axis 120. In other words, the movement is in the first plane. This movement of the gripping element 102 in the first plane corresponds to the first step of the transplanting method.

Figure 2 shows the gripping element 102 after the gripping element 102 has been moved left in the second axis 122. The gripping element 102 is now arranged above the first location 112. In particular, the gripping element 102 is arranged at a position aligned with the first location 112 along the third axis 124. In other words, the position of the gripping element 102 and the first location 112 are aligned along the third axis 124. The position of the gripping element 102 at this point is predetermined and the machine 100 is programmed to move the gripping element 102 to this location. This position can be set to be vertically above the location of the plug 150 in the first location 112.

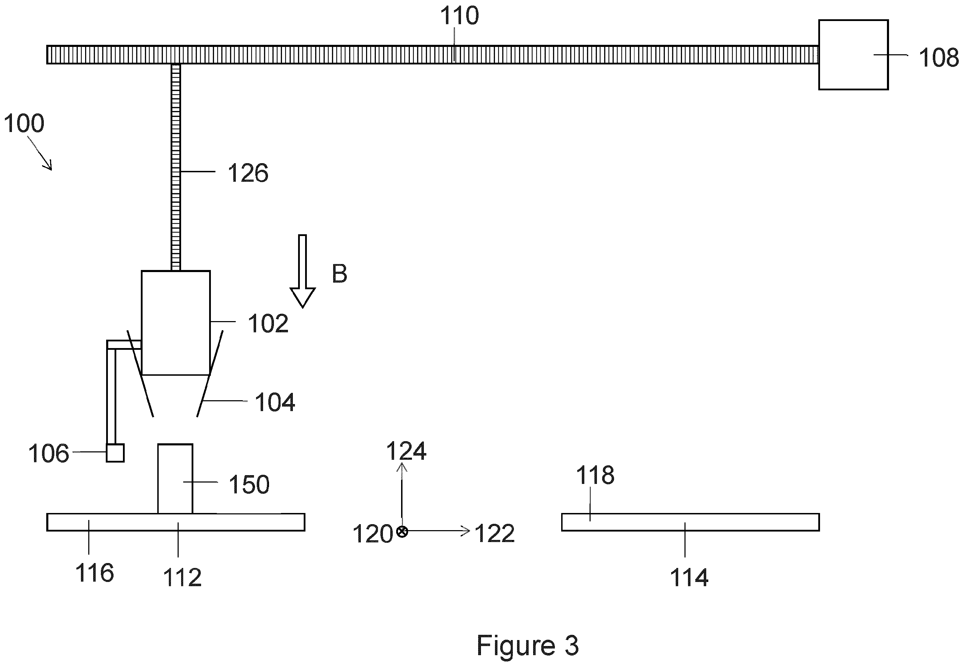

Referring to Figure 3, the machine 100 of the first embodiment is shown after a second step of the transplanting method. The machine 100 of Figure 3 is the same as the machine 100 of Figures 1 and 2. Figure 3 shows the machine 100 with the gripping element 102 moved in the third axis 124 towards the bottom left of Figure 3.

The machine 100 also comprises an extender 126. The extender 126 is in the form of a rail similar to the rail 110 and the second rail. The extender 126 interfaces with the rail 110 and the second rail. The extender 126 is arranged in the third axis 124. The extender 126 is therefore perpendicular to the rail 110. The extender 126 is movable relative to the rail 110. A hidden portion of the extender 126 above the rail 110 is not shown in the Figures. The gripping element 102 is connected to the extender 126 and is movable by moving the extender 126 relative to the rail 110. Whilst the rail 110 permits movement of the gripping element 102 along the first plane, the extender 126 permits movement of the gripping element 102 in the third axis 124. The gripping element 102 is configured to move with the extender 126 by moving the extender 126 relative to the rail 110. In other embodiments, the extender 126 may take other forms such as an extendable member, such as comprising extendable linkages. In one example, the extender 126 may comprise an accordion-style extending arm. In other examples, the gripping element 102 may be configured to move relative to the extender 126. For example, the extender 126 may remain stationary in the third axis 124 and the gripping element 102 may move over the extender 126.

In use, the machine 100 is operated to move the gripping element 102 by moving the extender 126 relative to the rail 110. The actuator 108 is configured to operate the movement of the gripping element 102 by moving the extender 126 relative to the rail 110. As shown in Figure 3, Arrow B indicates a direction of movement of the gripping element 102 in the third axis 124 towards the bottom of Figure 3. The gripping element 102 thus moves in the third axis 124. In particular, the gripping element 102 is moved in the second direction of the third axis 124. The second direction of the third axis 124 is towards the first location 112 from the rail 110. The gripping element 102 is therefore moved from the position shown in Figure 2 in the direction of Arrow B to the position shown in Figure 3. The movement in the third axis 124 is towards the first location 112. In the first embodiment, this movement in the third axis 124 is vertical (and downwards). In other words, the gripping element 102 is extended in the third axis 124. In the first embodiment, the gripping element 102 is lowered in the third axis 124. This movement of the gripping element 102 in the third axis 124 towards the first location 112 corresponds to the second step of the transplanting method.

In other embodiments, the movements indicated by Arrows A and B may be combined and performed concurrently. In other words, the gripping element 102 may move in the third axis 124 at the same time that the gripping element 102 moves in the first axis 120. In other examples, portions of the movements indicated by Arrows A and B may be performed alternately so that both movements overall occur generally together and complete at a similar time.

Figure 3 shows the gripping element 102 after the gripping element 102 has been moved downwards in the third axis 124. The gripping element 102 is now arranged adjacent the first location 112. In particular, the gripping element 102 is arranged at a position closer to the first location 112 than in Figure 2. The gripping element 102 is moved in the third axis 124 to a position from which the gripping element 102 can grip the plug 150. In other words, the gripping element 102 is moved to a location in proximity to the plug 150. The position of the gripping element 102 at this point is predetermined and the machine 100 is programmed to move the gripping element 102 to this location. The position can be set to arrange the fingers 104 ready to grip the plug 150, and therefore can be set to correspond to an expected position of the plug 150, including the expected height in the third axis 124.

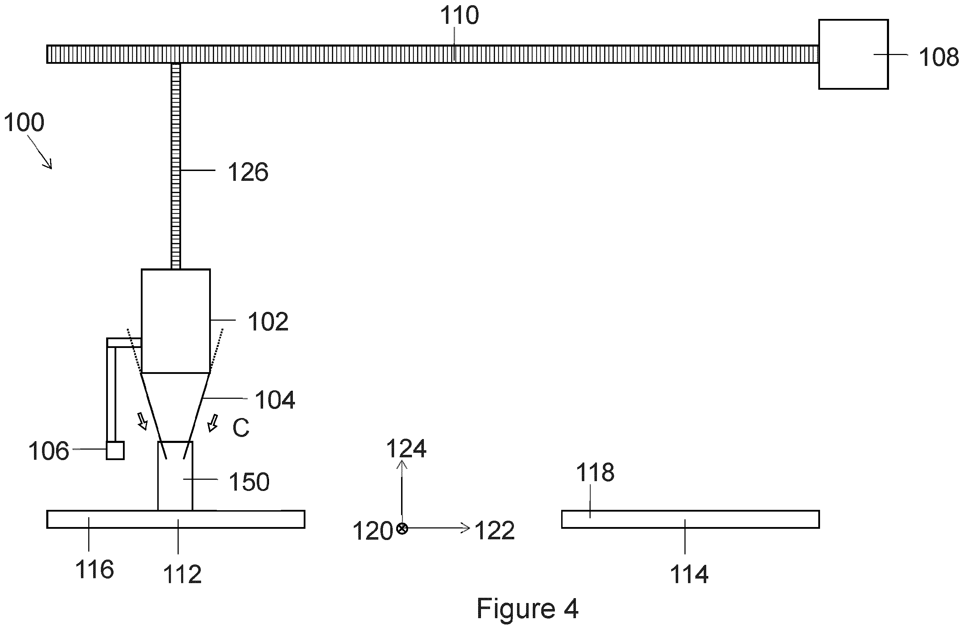

Referring to Figure 4, the machine 100 of the first embodiment is shown after a third step of the transplanting method. The machine 100 of Figure 4 is the same as the machine 100 of Figures 1 to 3. Figure 4 shows the machine 100 with the fingers 104 of the gripping element 102 moved into the closed configuration to grip the plug 150.

The fingers 104 are movable relative to the main body of the gripping element 102. The actuator 108 is configured to operate the fingers 104 of the gripping element 102. The fingers 104 are movable to grip and release the plug 150. In particular, the fingers 104 are movable by sliding the fingers 104 relative to the main body of the gripping element 102. The fingers 104 are movable to slide the fingers 104 downwards and together. The fingers 104 are movable to grip the plug 150 by moving the fingers 104 towards each other. This decreases the separation between the tips of the fingers 104. This is achieved by sliding the fingers 104 in a direction generally towards the first location 112 in the third axis 124. The fingers 104 have an open configuration and a closed configuration. The open configuration has a larger separation of the fingers 104 than the closed configuration. In the closed configuration, the fingers 104 are closer together than in the open configuration. When the fingers 104 are moved from the open configuration to the closed configuration, the plug 150 can be gripped. When the fingers 104 are moved from the closed configuration to the open configuration, the plug 150 can be released. Figures 1 to 3 show the fingers 104 in the open configuration. Figure 4 shows the fingers 104 in the closed configuration, where the previous position of the fingers 104 in the open configuration is shown in phantom indicated by dashed lines. In the first embodiment, the fingers 104 are moved by the motor of the main body of the gripping element 102. In other examples, the gripping element 102 comprises a separate motor for moving the fingers 104. In the closed configuration, the fingers 104 are moved further away from the main body of the gripping element 102. In other words, the fingers 104 are moved towards the plug 150 when moved into the closed configuration.

In use, the machine 100 is operated to move the fingers 104 of the gripping element 102 towards each other to grip the plug 150. The actuator 108 is configured to operate the movement of the fingers 104 of the gripping element 102. As shown in Figure 4, Arrows C indicate a direction of movement of the fingers 104 of the gripping element 102 downwards and towards each other. The fingers 104 thus move downwards and closer together (e.g. at least partly in the third axis 124 and the second axis 122). The fingers 104 move close enough together to grip the plug 150. In the first embodiment, the fingers 104 move downwards to penetrate a portion of the plug 150. In particular, the fingers 104 are forced between strands of *Sphagnum* of the plug 150. The fingers 104 are thereby partially inserted into the plug 150. The fingers 104 thus grip the plug 150 so that subsequent movement of the gripping element 102 will also move the plug 150. This movement of the fingers 104 of the gripping element 102 to grip the plug 150 at the first location 112 corresponds to the third step of the transplanting method.

Figure 4 shows the gripping element 102 after the fingers 104 have been partially inserted into the plug 150. The fingers 104 are now arranged in the closed configuration, gripping the plug 150. Figure 4 also shows the previous position of the fingers 104 in the open configuration in phantom indicated by dashed lines. The separation of the fingers 104 after the movement of the third step is closer together than in the previous position, and is extended in the third axis 124 towards the first location 112 so that the fingers 104 are partially inserted into the plug 150. The separation of the fingers 104 in the closed configuration is predetermined and the machine 100 is programmed to move the fingers 104 to this separation to grip the plug 150. The separation can be set to securely grip the plug 150 without causing damage.

In other embodiments, the fingers 104 are operated to be closer together in the closed configuration than in the first embodiment. For example, the fingers 104 may be operated to be adjacent or nearly touching so that strands of *Sphagnum* are effectively grasped between the fingers 104. In some examples, contact between the fingers 104 is avoided to prevent damage to the *Sphagnum* or the fingers 104.

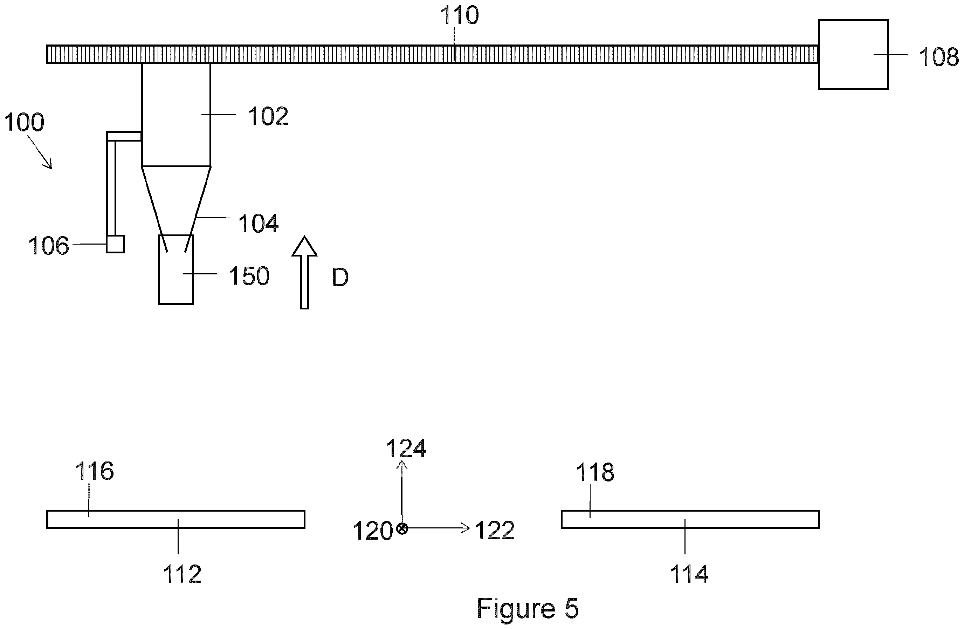

Referring to Figure 5, the machine 100 of the first embodiment is shown after a fourth step of the transplanting method. The machine 100 of Figure 5 is the same as the machine 100 of

Figures 1 to 4. Figure 5 shows the machine 100 with the gripping element 102 moved in the third axis 124 towards the top left of Figure 5.

In use, the machine 100 is operated to move the gripping element 102 in the third axis 124 by moving the extender 126. As shown in Figure 5, Arrow D indicates a direction of movement of the gripping element 102 in the third axis 124 towards the top of Figure 5. The gripping element 102 is therefore moved from the position shown in Figure 4 in the direction of Arrow D to the position shown in Figure 5. The movement in the third axis 124 is away from the first location 112. The gripping element 102 is moved in the first direction of the third axis 124. The first direction of the third axis 124 is away from the first location 112 towards the rail 110. In the first embodiment, the movement in the third axis 124 is vertical (and upwards). In other words, the gripping element 102 is retracted in the third axis 124 away from the first location 112. In the first embodiment, the gripping element 102 is raised in the third axis 124. This movement of the gripping element 102 in the third axis 124 away from the first location 112 corresponds to the fourth step of the transplanting method. The movement of the fourth step is opposite to the movement of the second step. In particular, the movement of the gripping element 102 away from the first location 112 is in the opposite direction to the movement of the gripping element 102 towards the first location 112.

Because the gripping element 102 is raised after the fingers 104 have been moved into the closed configuration and have gripped the plug 150, the plug 150 is also raised with the gripping element 102. As shown in Figure 5, the plug 150 is lifted from the first location 112 with the gripping element 102.

Figure 5 shows the gripping element 102 after the gripping element 102 has been moved upwards in the third axis 124. The gripping element 102 is now arranged above the first location 112. In particular, the gripping element 102 is arranged at a position aligned with the first location 112 along the third axis 124. In other words, the position of the gripping element 102 and the first location 112 are aligned along the third axis 124. The position of the gripping element 102 is generally the same as in Figure 2, except that the fingers 104 are in the closed configuration and are holding the plug 150.

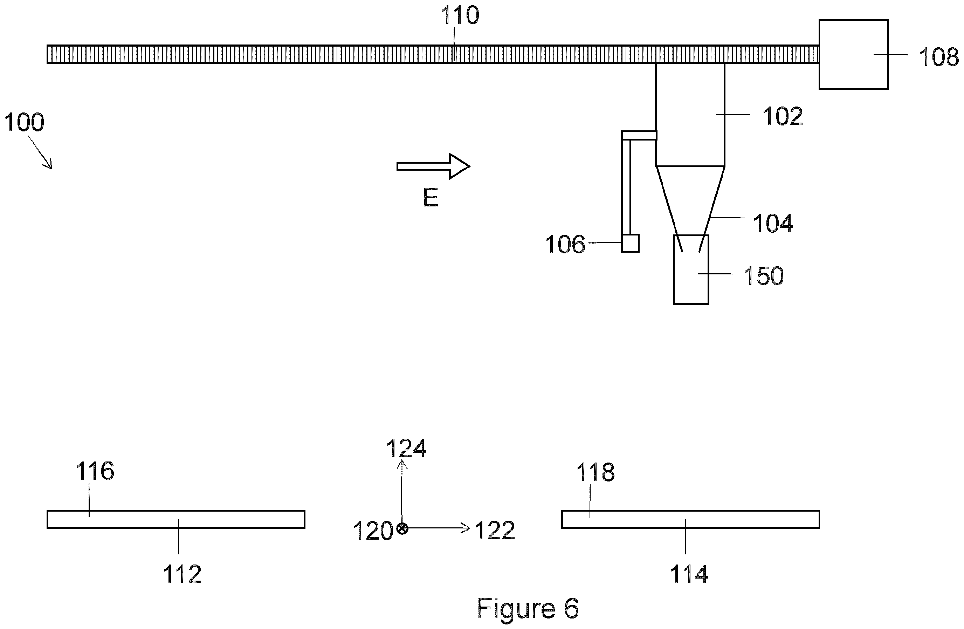

Referring to Figure 6, the machine 100 of the first embodiment is shown after a fifth step of the transplanting method. The machine 100 of Figure 6 is the same as the machine 100 of Figures 1 to 5. Figure 6 shows the machine 100 with the gripping element 102 moved in the second axis 122 towards the top right of Figure 6.

In use, the machine 100 is operated to move the gripping element 102 in the second axis 122. As shown in Figure 6, Arrow E indicates a direction of movement of the gripping element 102 in the second axis 122 towards the right of Figure 6. The gripping element 102 is therefore moved from the position shown in Figure 5 in the direction of Arrow E to the position shown in Figure 6. In the first embodiment, the movement in the second axis 122 is horizontal (and right). The gripping element 102 is moved in the first direction of the second axis 122. The first direction of the second axis 122 is towards the second location 114 from the first location 112. In other embodiments, the movement indicated by Arrow E may also include movement in the first axis 120. In other words, the movement is in the first plane. This movement of the gripping element 102 in the first plane corresponds to the fifth step of the transplanting method. The movement of the fifth step is opposite to the movement of the first step. In particular, the movement of the gripping element 102 towards the right is in the opposite direction to the movement of the gripping element 102 towards the left.

Figure 6 shows the gripping element 102 after the gripping element 102 has been moved right in the second axis 122. The gripping element 102 is now arranged above the second location 114. In particular, the gripping element 102 is arranged at a position aligned with the second location 114 along the third axis 124. In other words, the position of the gripping element 102 and the second location 114 are aligned along the third axis 124. The movement of the gripping element 102 in the second axis 122 may therefore comprise moving the gripping element 102 until the gripping element 102 is aligned with the second location 114 in the third axis 124.

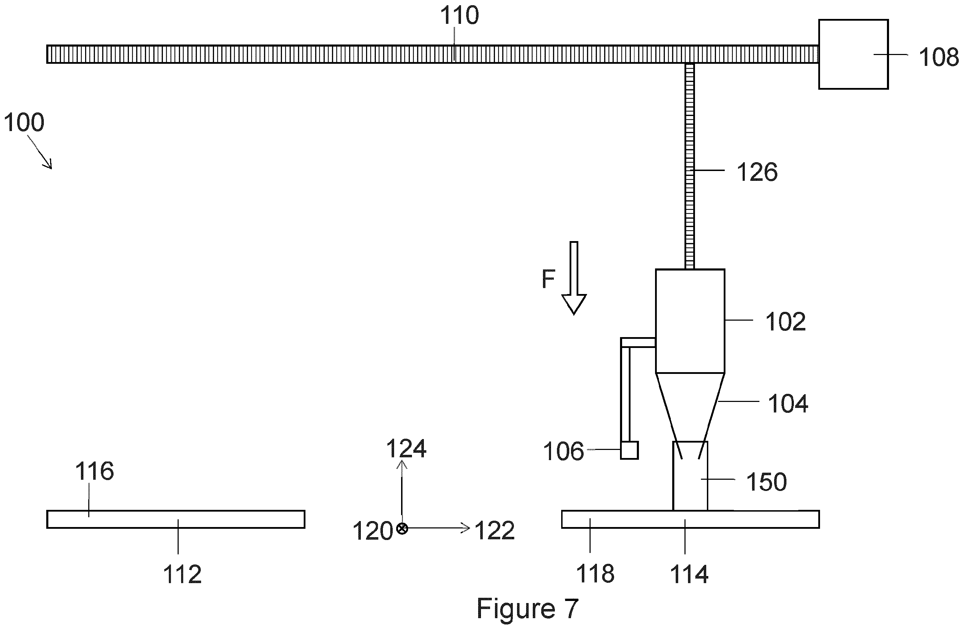

Referring to Figure 7, the machine 100 of the first embodiment is shown after a sixth step of the transplanting method. The machine 100 of Figure 7 is the same as the machine 100 of Figures 1 to 6. Figure 7 shows the machine 100 with the gripping element 102 moved in the third axis 124 towards the bottom right of Figure 7.

In use, the machine 100 is operated to move the gripping element 102 in the third axis 124. As shown in Figure 7, Arrow F indicates a direction of movement of the gripping element 102 in the third axis 124 towards the bottom of Figure 7. The gripping element 102 is therefore moved from the position shown in Figure 6 in the direction of Arrow F to the position shown in Figure 7. The movement in the third axis 124 is towards the second location 114. The gripping element 102 is moved in the second direction of the third axis 124. The second direction of the third axis 124 is towards the second location 114 form the rail 110. In the first embodiment, the movement in the third axis 124 is vertical (and downwards). In other words, the gripping element 102 is extended in the third axis 124 towards the second location 114.

In the first embodiment, the gripping element 102 is lowered in the third axis 124. This movement of the gripping element 102 in the third axis 124 towards the second location 114 corresponds to the sixth step of the transplanting method.

In other embodiments, the movements indicated by Arrows E and F may be combined and performed concurrently. In other words, the gripping element 102 may move in the third axis 124 at the same time that the gripping element 102 moves in the first axis 120. In other examples, portions of the movements indicated by Arrows E and F may be performed alternately so that both movements overall occur generally together and complete generally at a similar time.

Figure 7 shows the gripping element 102 after the gripping element 102 has been moved downwards in the third axis 124. The gripping element 102 is now arranged adjacent the second location 114. In particular, the gripping element 102 is arranged at a position closer to the second location 114 than in Figure 6. The gripping element 102 is moved in the third axis 124 to a position from which the gripping element 102 can release the plug 150. In other words, the gripping element 102 is moved to a location in proximity to where the plug 150 will be released. The position of the gripping element 102 at this point is predetermined and the machine 100 is programmed to move the gripping element 102 to this location. The position can be set to arrange the fingers 104 ready to release the plug 150, and therefore can be set to correspond to a desired position for releasing the plug 150. To avoid dropping the plug 150 from a height, the gripping element 102 is configured to release the plug 150 onto the output conveyor 118 at the second location 114. In the first embodiment, the movement in the third axis 124 comprises moving the gripping element 102 until the plug 150 contacts the output conveyor 118.

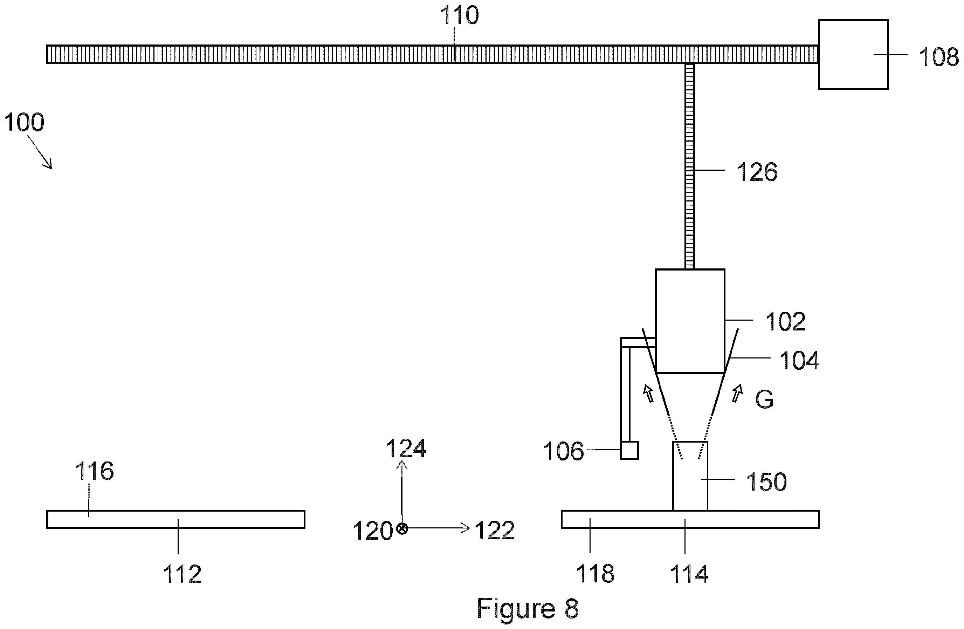

Referring to Figure 8, the machine 100 of the first embodiment is shown after a seventh step of the transplanting method. The machine 100 of Figure 8 is the same as the machine 100 of Figures 1 to 7. Figure 8 shows the machine 100 with the fingers 104 of the gripping element 102 moved into the open configuration to release the plug 150.

The fingers 104 are movable to release the plug 150 by moving the fingers 104 away from each other. In the first embodiment, the fingers 104 are movable by sliding the fingers 104 relative to the main body of the gripping element 102. The fingers 104 are moveable to slide the fingers 104 upwards and away from each other. The fingers 104 are movable to release the plug 150 by moving the fingers 104 away from each other. This increases the separation between the tips of the fingers 104. This is achieved by sliding the fingers 104 in a direction generally away from the second location 114 in the third axis 124. The fingers 104 are moved from the closed configuration in which the plug 150 is held, to the open configuration in which the plug 150 is released. Thus, the plug 150 is released at the second location 114 on the output conveyor 118.

In use, the machine 100 is operated to move the fingers 104 of the gripping element 102 away from each other to release the plug 150. The actuator 108 is configured to operate the movement of the fingers 104 of the gripping element 102. As shown in Figure 8, Arrows G indicate a direction of movement of the fingers 104 of the gripping element 102 away from each other. The fingers 104 thus move further apart (e.g. at least partly in the second axis 122). At the same time, the fingers 104 move upwards through the sliding movement, withdrawing the fingers 104 from the plug 150. The fingers 104 move far enough apart to release the plug 150. In the first embodiment, the fingers 104 penetrating the plug 150 are withdrawn from the plug 150. In particular, the fingers 104 are removed from between the strands of *Sphagnum* of the plug 150. In other words, the fingers 104 are removed from the plug 150. The movement of the fingers 104 of the gripping element 102 to release the plug 150 at the second location 114 corresponds to the seventh step of the transplanting method.

Figure 8 shows the gripping element 102 after the fingers 104 have been removed from the plug 150. The fingers 104 are now arranged in the open configuration, releasing the plug 150. Figure 6 shows the previous position of the fingers 104 in the closed configuration in phantom, indicated by dashed lines. The separation of the fingers 104 after the movement of the seventh step is further apart than in the previous position, and the fingers 104 are removed from the plug 150. The separation of the fingers 104 in the open configuration is predetermined and the machine 100 is programmed to move the fingers 104 to this separation to release the plug 150. The separation can be set to ensure release of the plug 150.

Referring to Figure 9, the machine 100 of the first embodiment is shown during an eighth step of the transplanting method. The machine 100 of Figure 9 is the same as the machine 100 of Figures 1 to 8. Figure 9 shows the machine 100 with the gripping element 102 moved in the second axis 122 towards the right of Figure 9.

When the plug 150 is released at the second location 114, the pushing element 106 is aligned with the plug 150 in the second axis 122. In particular, the pushing element 106 is aligned with an upper portion of the plug 150 in the second axis. Accordingly, the movement of the gripping element 102 in the third axis 124 ensures that the pushing element 106 is aligned with an expected position of the plug 150, in particular with an expected position of an upper portion of the plug 150. In particular, a pusher of the pushing element 106 is aligned with the plug 150, and preferably with an upper portion of the plug 150. As the fingers 104 have been moved into the open configuration, the fingers 104 are withdrawn away from the second location 114. This ensures that the fingers 104 do not interfere with the pushing element 106. The tips of the fingers 104 (i.e. the lowest point in the third axis 124 that engage the plug 150) are arranged at a location higher than the pushing element 106 in the third axis 124, when in the open configuration.

The pushing element 106 is arranged on a second side of the gripping element 102. In particular, the gripping element 102 has a first side and a second side. The first side and the second side are on opposite sides of the gripping element 102 in the second axis 122. The first side is towards the first direction of the second axis 122 and the second side is towards the second direction of the second axis 122. In other words, the first side is towards the second location 114 and the second side is towards the first location 112.

In use, the machine 100 is operated to move the gripping element 102 in the second axis 122. This in turn moves the pushing element 106 which is attached to the main body of the gripping element 102. As shown in Figure 9, Arrow H indicates a direction of movement of the gripping element 102 in the second axis 122 towards the right of Figure 9. The gripping element 102 is therefore moved from the position shown in Figure 8 in the direction of Arrow H to the position shown in Figure 9. In the first embodiment, the movement in the second axis 122 is horizontal (and right). The movement is further away from the first location 112 in the second axis 122. The movement in the second axis 122 is only part of the distance compared to the movement in the second axis 122 of the first and fifth steps of the transplanting method. In particular, the movement does not cause the gripping element 102 to move to the entire distance between the first location 112 and the second location 114. Instead, the movement is only a portion of this movement. Instead, the movement is sufficient to cause the pushing element 106 to engage the plug 150. This movement of the gripping element 102 in the second axis 122 corresponds to the initial stages of the eighth step of the transplanting method. Figure 9 shows the machine 100 part way through the eighth step where the plug 150 is partially pushed over.

Because the pushing element 106 is aligned with the plug 150 in the second axis 122, when the pushing element 106 is moved in the second axis 122, the pushing element 106 engages the plug 150. In the first embodiment, the pushing element 106 engages an upper portion of the plug 150. The pushing element 106 continues to move in the second axis 122 to push the plug 150 over. In particular, by pushing the upper portion of the plug 150 in the second axis 122, the plug 150 is tilted over and rotates about the first axis 120. The plug 150 tilts over in a direction indicated by Arrow I.

In other embodiments, the pushing element 106 may push the plug 150 independently of movement of the gripping element 102. However, using the movement of the gripping element 102 to move the pushing element 106 is convenient and efficient because a mechanism for moving the gripping element 102 in the second axis 122 is already provided. This can simplify the process and improve production speed.

Figure 9 shows the gripping element 102 after the gripping element 102 has been moved right in the second axis 122 and the pushing element 106 has engaged the plug 150. The pushing element 106 has begun to push the plug 150 over.

Referring to Figure 10, the machine 100 of the first embodiment is shown after the eighth step of the transplanting method. The machine 100 of Figure 10 is the same as the machine 100 of Figures 1 to 9. Figure 10 shows the machine 100 with the gripping element 102 moved in the second axis 122 towards the right of Figure 10.

In use, the machine 100 is operated to move the gripping element 102 in the second axis 122. This in turn moves the pushing element 106 which is attached to the main body of the gripping element 102. As shown in Figure 10, Arrow J indicates a direction of movement of the gripping element 102 in the second axis 122 towards the right of Figure 10. This is further movement beyond the movement of Figure 9, and continues the movement in the second axis 122. The gripping element 102 is therefore moved from the position shown in Figure 9 in the direction of Arrow J to the position shown in Figure 10. In the first embodiment, the movement in the second axis 122 is horizontal (and right). The movement is sufficient to cause the pushing element 106 to entirely push over the plug 150. This movement of the gripping element 102 in the second axis 122 corresponds to the completion of the eighth step of the transplanting method.

The pushing element 106 continues to engage the plug 150 and continues to push the plug 150 over. The pushing element 106 pushes the upper portion of the plug 150 in the second axis 122 until the plug 150 tilts over entirely. The plug 150 is pushed over and onto its side. Once the plug 150 has been pushed over, the movement of the pushing element 106 in the second axis 122 can stop. The magnitude of the movement may be set to be sufficient to push the plug 150 entirely over. In some examples, the movement may continue beyond this point.

Figure 10 shows the gripping element 102 after the gripping element 102 has been moved right in the second axis 122 and the pushing element 106 has fully pushed over the plug 150. The plug 150 is arranged in a second orientation. The second orientation is sideways. The plug 150 is arranged generally horizontally so that its length is arranged aligned with the second axis 122. The strands of *Sphagnum* are generally arranged sideways in the second orientation. The second orientation is perpendicular to the first orientation. The plug 150 is arranged on its side, so that its side rests on the output conveyor 118.

The output conveyor 118 is used to output the plug 150 after transplanting. In the first embodiment, the plug 150 is released at the second location 114. The output conveyor 118 is operated to move the conveyor belt in the first axis 120 into the page of Figure 1. This moves the plug 150 in the first axis 120 into the page of Figure 1. The movement of the output conveyor 116 is then stopped when the plug 150 is moved to the desired position away from the second location 114. In this manner, the plug 150 is fed away from the second location 114 by the output conveyor 118. The output conveyor 118 could instead be operated in the opposite direction in the first axis 120, out of the page of Figure 1, or could be absent and the plug 150 unloaded by hand.

In the first embodiment, the output conveyor 118 is used to assist wrapping the plug 150. In particular, a wrapping is arranged on the output conveyor 118. For example, the wrapping may be a plastic sheet. The plug 150 is then placed sideways on the wrapping in the second orientation. The output conveyor 118 is operated to move the plug 150 along in the first axis 120 to provide space at the second location 114 to receive another plug 150. The gripping element 102 may proceed to transplant a second plug 150 whilst the output conveyor 118 is operating. For example, the gripping element 102 may return to the initial configuration of Figure 1 or to the first step of the transplanting method of Figure 2 to collect a second plug 150. The second transplanted plug 150 is then released at the second location 114 on the wrapping at a location spaced apart from the first plug 150. A plurality of plugs 150 can be arranged onto the wrapping in this way. The wrapping can then be wrapped around the plugs 150 to roll the plugs 150 into a roll. For example, each roll may comprise a plurality of plugs 150, such as at least 10 plug, for example 20 plugs. It is desirable to roll a plurality of plugs 150 in this way to keep them tight, fresh, and avoid drying out, whilst also keeping the size small and compact. The plugs 150 can be compressed by rolling the roll reasonably tightly whilst avoiding damage to the plugs 150. Such an arrangement is not beneficial for ordinary plants, where such wrapping would cause damage to leaves and stems of vascular plants, and their roots would be exposed. Accordingly, the machine 100 is specifically adapted for transplanting *Sphagnum* 100.

Because the machine 100 is configured to transplant the plug 150 and the pushing element 106 is configured to push the plug 150 into the second orientation, the plug 150 can be placed on its side onto the wrapping at the second location 114. This allows the wrapping to easily be rolled around the plug 150. This more easily assembles a roll of plugs 150.

In other examples, this allows the plug 150 to be removed to a different location. This separates the position of unloading from the position of transplanting. When the plug 150 is unloaded by hand, this improves safety because the unloading of the plug 150 from the output conveyor 118 can be separated from the release of the plug 150 by the gripping element 102. Moreover, because the unloading is separated, the efficiency can be improved because the gripping element 102 does not need to wait for individual unloading each time, and instead the output conveyor 118 can be used to unload multiple plugs 150 in a row.

In other embodiments, different mechanisms can be used to move the gripping element 102. For instance, in other embodiments, the actuator 108 may be used to move the rail 110 in the third axis 124. For example, the actuator 108 may comprise a motor for moving the rail 110 upwards and downwards in the third axis 124.

In the same or other embodiments, the gripping element 102 may be arranged on a rail in the first axis 120. The rail in the first axis 120 may be referred to as a first axis rail. The gripping element 102 may move along the first axis rail in the first axis 120, such as via an actuator such as a motor on the gripping element 102. The first axis rail may be connected to the rail 110 in the second axis 122. The rail 110 may be referred to as a second axis rail 110. For example, the first axis rail may interface with the second axis rail 110 to allow movement of the first axis rail in the second axis 122 relative to the second axis rail 110. For example, the first axis rail or the second axis rail 110 may include an actuator such as a motor for moving the first axis rail along the second axis rail. This allows the gripping element 102 to move in the second axis 122. The second axis rail 110 may in turn be connected to a third axis rail in the third axis 124. This may be instead of the mechanism including the extender 126. For example, the second axis rail 110 may interface with the third axis rail to allow movement of the second axis rail 110 in the third axis 124 relative to the third axis rail. For example, the second axis rail or the third axis rail 110 may include an actuator such as a motor for moving the second axis rail along the third axis rail. This allows the gripping element 102 to move in the third axis 124. In other cases, the three rails may interface in different ways or interface in different orders, and the gripping element may contain a motor for moving in different axes. Each of the actuators may be combined or separate, and the actuator 108 may be implemented as a single actuator or multiple actuators distributed across the machine.

In other embodiments, there may be one or more actuators 108 that control movement of the gripping element 102 in multiple axes. For instance, the actuator 108 may control movement of the gripping element 102 in the second axis 122. Other actuators may be used to control movement of the gripping element 102 in other axes, such as the first axis 120 and the third axis 124. For instance, the actuator 108 may be used to control movement of the gripping element 102 in the second axis 122 by controlling movement of the first axis rail along the second axis rail. A second actuator may be used to control movement of the gripping element 102 in the third axis 124 by controlling movement of the second axis rail along the third axis rail. A third actuator may be used to control movement of the gripping element 102 in the first axis 120 by controlling movement of the gripping element 102 along the first axis rail. The third actuator may be a motor on the gripping element 102.

In other embodiments, the gripping element 102 is not connected to the actuator 108 via cables or wires. In cases where the actuator 108 moves the rails in order to move the gripping element 102, it is often not necessary to connect the actuator 108 to the gripping element 102. In some cases, the connection may be wireless. The gripping element 102 may wirelessly connect to a controller or actuator which controls the third actuator, where the third actuator may be a motor on the gripping element 102.

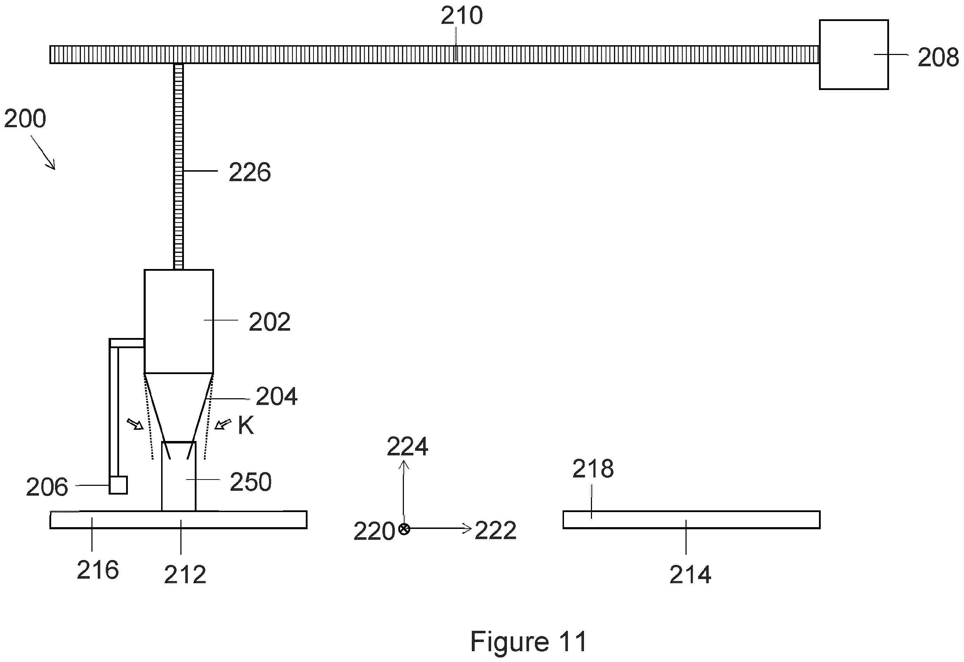

Referring to Figure 11, according to a second embodiment of the present disclosure, a machine 200 is provided. The machine 200 is the same as the machine 100 of the first embodiment, except where described below. Similar reference numerals are used to denote similar features.

The machine 200 of the second embodiment differs from the machine 100 of the first embodiment in that the fingers 204 move between an open configuration and a closed configuration by moving together without moving downwards. Instead of sliding, the fingers 204 pivot to change the separation of the tips of the fingers 204. Otherwise, operation of the machine 200 is similar to the machine 100. By moving the fingers 204 together, the fingers 204 are moved from the open configuration to the closed configuration, and the plug 250 can be gripped. In the closed configuration, the separation of the fingers 204 is less than in the open configuration. In other words, the tips of the fingers 204 are closer together in the closed configuration.

Figure 11 shows the machine 200 after the third step of the transplanting method. As such, Figure 11 is similar to Figure 4 of the first embodiment, except where described below. Figure 11 shows the machine 200 with the fingers 204 moved from the open configuration to the closed configuration. As shown in Figure 11, Arrows K indicate a direction of movement of the fingers 204 of the gripping element 202 towards each other. The fingers 204 pivot to move closer together instead of sliding downwards. The plug 250 can then be gripped by the fingers 204. Figure 11 shows the gripping element 202 after the fingers 204 have been partially inserted into the plug 250. The fingers 204 are now arranged in the closed configuration, gripping the plug 250. Figure 11 also shows the previous position of the fingers 204 in the open configuration in phantom indicated by dashed lines.

The other steps of the method of the first embodiment can readily be applied to the machine 200 of the second embodiment.

In the second embodiment, the fingers 204 can also be moved apart in an analogous manner. Thus, the fingers 204 can be moved from the closed configuration to the open configuration, and the plug 250 can be released. Accordingly, the fingers 204 can move outwards apart from each other in the seventh step of the method, similar to Figure 8 of the first embodiment. In such a case, the fingers 204 may not slide upwards but instead pivot outwards back to the open configuration shown by dashed lines in Figure 11 in order to release the plug 250 at the second location 214.

In some embodiments, the movement of the fingers 104 may comprise partial sliding and partial pivoting. For example, the fingers 104 may slide but also may move together and apart.

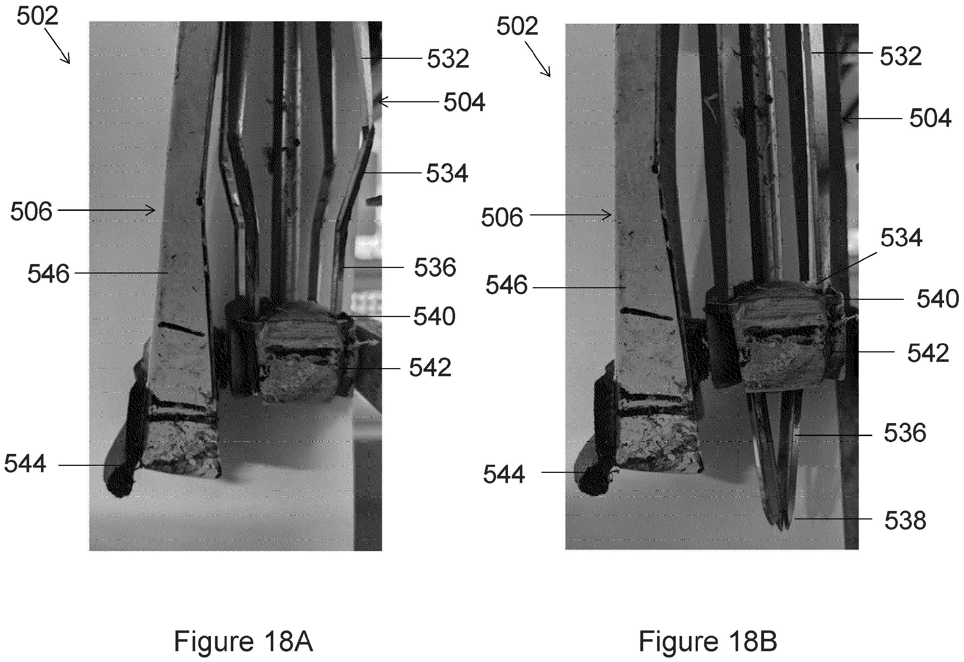

In other embodiments, other mechanisms for moving the fingers 104 between the open and closed configurations are possible. In some examples, the fingers 104 are not straight and may be curved or comprise angled sections such as described in relation to Figures 18A and 18B.

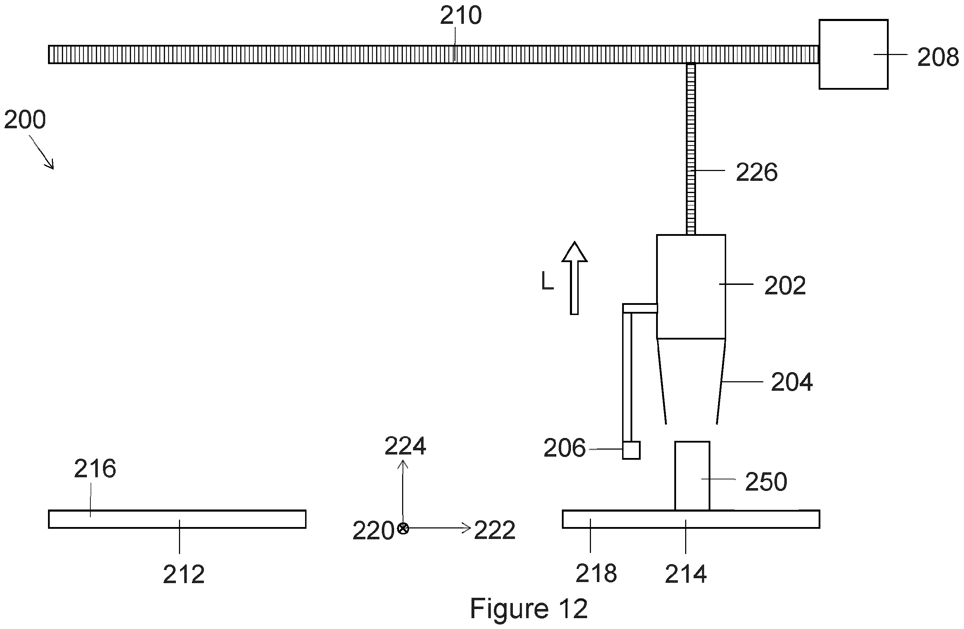

Referring to Figure 12, the machine 200 according to the second embodiment of Figure 11 is shown after a seventh step of the transplanting method. The machine 200 is the same as the machine 200 shown in Figure 11. Similar reference numerals are used to denote similar features.

In some examples of the second embodiment, the method further comprises a step of moving the gripping element 202 in the third axis 224 away from the second location 214 after the plug 250 has been released at the second location 214. As shown in Figure 12, the plug 250 has been released in the seventh step of the transplanting method by moving the fingers 204 to the open configuration. This is therefore a similar position to Figure 8 of the first embodiment.

Figure 12 shows the machine 200 after moving the gripping element 202 upwards in the third axis 224. The gripping element 202 is moved in the first direction of the third axis 224. The first direction of the third axis 224 is away from the second location 214 towards the rail 110. This movement is used to align the pushing element 206 with the upper portion of the plug 250. For example, it may be desired to locate the gripping element 202 close to the second location 214 to release the plug 250, especially if the fingers 204 are particularly short. In such cases, the pushing element 206 may be aligned with the plug 250 at a position which makes the pushing over more difficult. For example, pushing at the midpoint of the plug 250 or below can be more difficult to achieve a smooth pushing over movement. Additionally, as the fingers 204 do not slide upwards, the fingers 204 may be arranged at a position which may interfere with the plug 250 even in the open configuration. In particular, although the fingers 204 when in the open configuration may not interfere with the plug 250 when the gripping element 202 is moved upwards in the third axis 224 after releasing the plug 250, if the gripping element 202 is moved in the second axis 222, then the fingers 204 may contact the plug 250 and interfere with the pushing by the pushing element 206. Therefore, the gripping element 202 may be moved upwards away from the second location 214 to align the pushing element 206 with an upper portion of the plug 250 and withdraw the fingers 204 away from the plug 250. In other examples, the pushing element 206 may be movable relative to the gripping element 202 and may move in the third axis 224 to the desired height. Accordingly, this step is performed before the eighth step of the method, such as shown in Figures 9 and 10 of the first embodiment, including pushing the plug 250 at the second location 214. Subsequently to the movement of Figure 12, the second embodiment can then go through the eighth step of the method similar to Figures 9 and 10 of the first embodiment and push the plug 250 over at the second location 214. Due to the movement in the third axis 224 shown in Figure 12, the fingers 204 will be clear of the plug 250 to allow the pushing element 206 to push the plug 250 over. The movement in the third axis of Figure 12 is not limited to the arrangement of the fingers 204 of the second embodiment, and may be provided in other embodiments to provide clearance before the pushing of the eighth step.

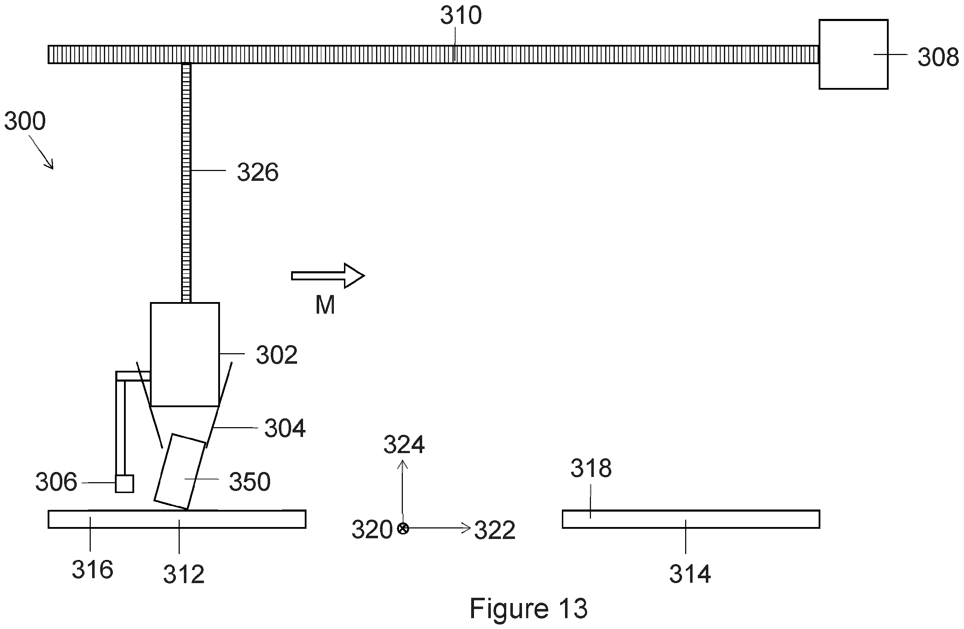

Referring to Figure 13, according to a third embodiment of the present disclosure, a machine 300 is provided. The machine 300 is the same as the machine 100 of the first embodiment, except where described below. Similar reference numerals are used to denote similar features.

The machine 300 of the third embodiment differs from the machine 100 of the first embodiment in that the gripping element 302 is configured to move in the second axis 322 after the gripping element 302 has moved in the third axis 324 towards the first location 312 and before the fingers 304 have gripped the plug 350. Figure 13 shows the machine 300 after the second step of the method shown in Figure 3, and after the gripping element 302 is then moved in the second axis 322.

In particular, the gripping element 302 moves in the third axis 324 to a position such that the tips of the fingers 304 are adjacent, or preferably partially inserted into the plug 150. However, as the fingers 304 are still in the open configuration, the plug 150 is not gripped by the fingers 304. Thus, if the gripping element 302 were moved in the second axis 322 away from the first location 312 at this stage, the plug 350 would not be pulled up therewith and would instead be left at the first location 312. In the third embodiment, the gripping element 302 is moved to a position after the second step of the method such that the tips of the fingers 304 are less than 5 cm above an upper surface of the plug tray. The plug tray has a height of between 2.5 cm and 5 cm above the input conveyor 316.

The gripping element 302 moves in the first direction of the second axis 322. The first direction of the second axis 322 is towards the second location 314 from the first location 312.The gripping element 302 moves in the same direction as the direction in which the pushing element 306 pushes the plug 350. In Figure 13, the movement is towards the right of Figure 12. The magnitude of movement is small relative to the movement from a position aligned with the first location 112 in the third axis 324 to a position aligned with the second location 114 in the third axis 324 in accordance with the fifth step of the method shown in Figure 6. In the third embodiment, the movement is less than a width of the plug 350.

By moving the gripping element 302 in the second axis 322, the fingers 304 are shifted which shifts the plug 350. As the fingers 304 only contact the plug 350 towards the top, the plug 350 tilts about the first axis 320. The plug 350 is moved into a first orientation. In this embodiment, the plug 350 is previously in a third orientation before the movement of Figure 13, which may be upright at the first location 312. The first orientation is an orientation between the third orientation and the second orientation. This allows the fingers 304 to be inserted at an angle relative to the upright position of the first orientation of the plug 350. Accordingly, in the pushing of the eighth step, the plug is tilted from the first orientation to the second orientation.

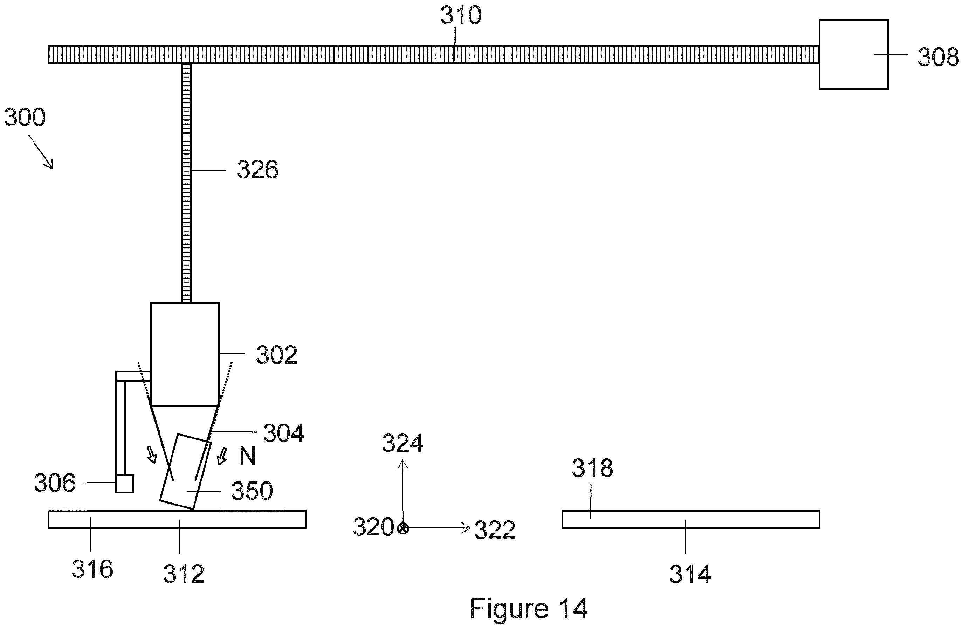

Referring to Figure 14, the machine 300 according to the third embodiment is shown after moving the fingers 304 to the closed configuration. The machine 300 is the same as the machine 300 shown in Figure 13. Similar reference numerals are used to denote similar features.

Figure 14 shows the fingers 304 inserted into the plug 350 after the movement in the second axis 322 shown in Figure 13. The fingers 304 slide in the same manner as described in the first embodiment in relation to Figure 4. The fingers 304 are moved in the direction indicated by Arrows N. The fingers 304 are in the closed configuration and grip the plug 350. Because of the movement in the second axis 322 shown in Figure 13, this slightly angles the fingers 304 relative to the plug 350. The fingers 304 are then inserted into the plug 350 at an angle offset from the angle if the plug was in the first orientation.

When the plug 350 is then transplanted to the second location 314, the plug 350 is released and positioned at a slight angle from the first orientation. In other words, the plug 350 is already slightly tilted. This aids the tilting over of the plug 350 by the pushing element 306 because the plug 350 is already angled. This movement allows the plug 350 to be slightly biased to tilt over onto its side. This assists the tilting of the plug 350 in a direction towards the opposite side of the second location 314 from the first location 312.

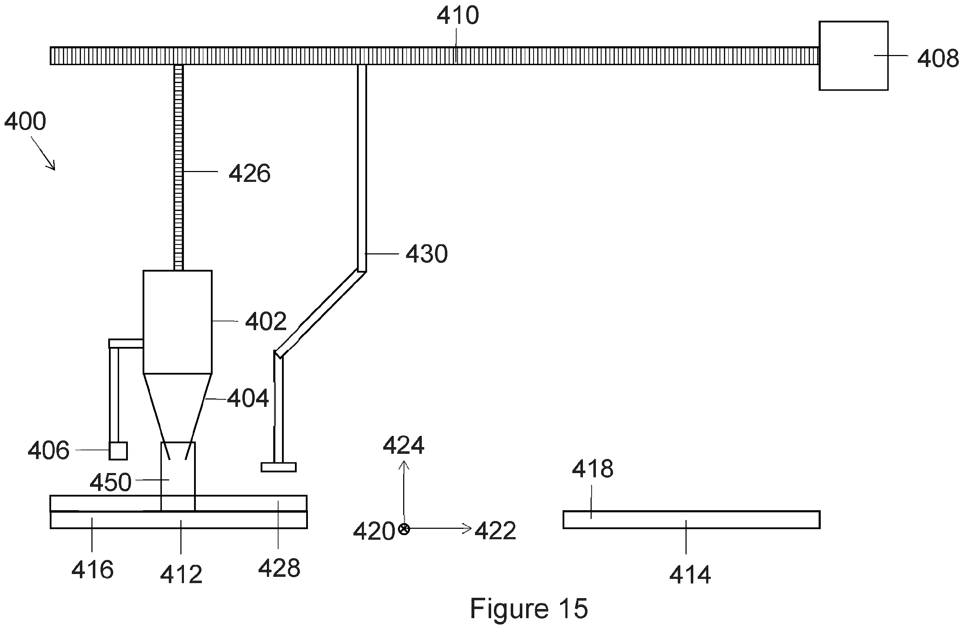

Referring to Figure 15, according to a fourth embodiment of the present disclosure, a machine 400 is provided. The machine 400 is the same as the machine 100 of the first embodiment, except where described below. Similar reference numerals are used to denote similar features.

The machine 400 further comprises a plug tray 428. The plug tray 428 is arranged on the input conveyor 416. The plug tray 428 comprises a plug cell in which the plug 450 is arranged. The plug tray 428 may be provided in other embodiments as is not limited to the fourth embodiment. The plug tray 428 may comprise a plurality of plug cells for receiving a plurality of plugs 450. Only a single cell is shown for illustrative purposes, but in other examples more cells can be provided, such as at least 100 such as 128.

The machine 400 further comprises a support 430. The support 430 is used to assist removal of the plug 450 from the plug tray 428. The support 430 is operated to push downwards in the third axis 424 against the plug tray 428. The support 430 is operated to push against the plug tray 428 concurrently with the gripping element 402 moving upwards away from the first location 412. The support 430 is therefore used to retain the plug tray 428 in place while the plug 450 is removed. This assists removal of the plug 450. The support 430 is then withdrawn out of the way of the gripping element 402 to permit movement of the gripping element 402 in the second axis 422 to transplant the plug 450 to the second location 414.

Figure 15 shows the machine 400 after the third step of closing the fingers 404 to grip the plug 450. The support 430 is in a raised position. In the raised position, the support 430 does not engage the plug tray 428.

The support 430 is arranged on the first side of the gripping element 402. The support 430 is arranged towards the second location 414 relative to the gripping element 402, at least when the gripping element 402 is arranged at the first location 412. Typically, in conventional machines a support 430 may be provided on the opposite side to support the empty tray. However, in the third embodiment, the support 430 may support other plugs 450 in the plug tray 428. The support 430 may push against other plugs 450 in the plug tray 428 which have not yet been transplanted. In particular, the support may push against plugs 450 in an adjacent row of the plug tray 428. This aids removal of the plug 450 and avoids plugs in the adjacent row being removed therewith.

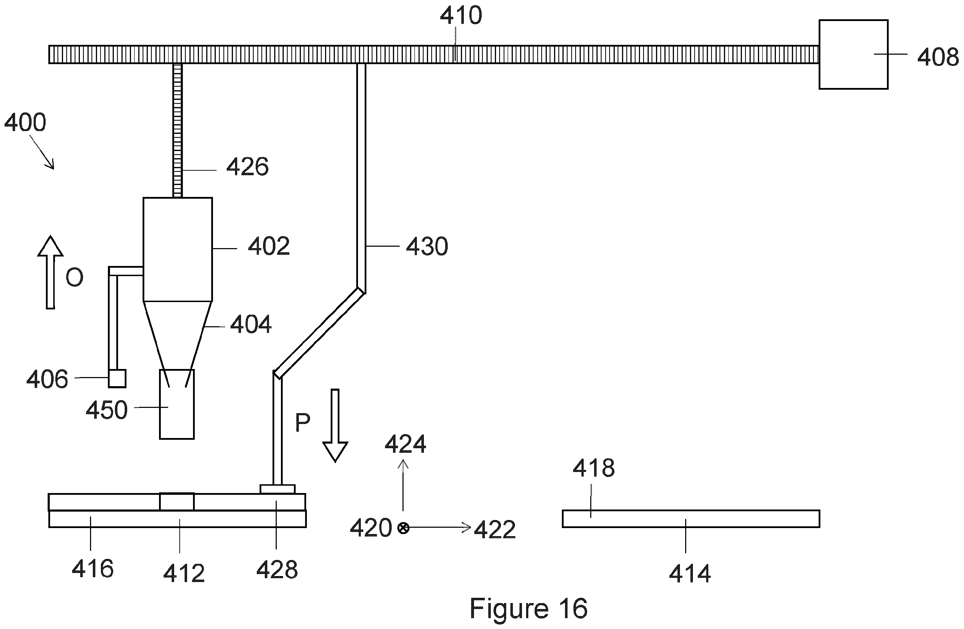

Referring to Figure 16, the machine 400 according to the fourth embodiment is shown after moving the gripping element 402 upwards in the third axis 424 away from the first location 412, and after movement of the support 430 to a lowered position. This is similar to the movement of Figure 5 of the first embodiment.

Figure 16 shows the gripping element 402 moved partially upwards in the third axis 424 indicated by Arrow O. At the same time, the support 430 is lowered to engage against the upper surface of the plug tray 428. The support 430 is configured to hold the plug tray 428 down (or other plugs 450 in the plug tray 428) as the gripping element 402 is raised to remove the plug 450 from the plug tray 428. This makes removal of the plug 450 easier.

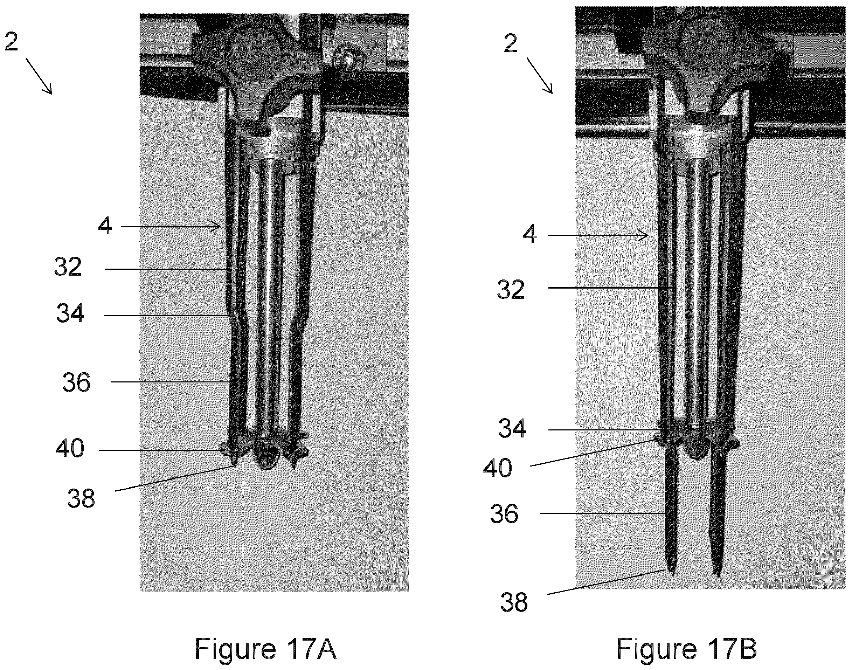

Referring to Figures 17A and 17B, a gripping element 2 according to a conventional plug transplanting machine is provided. The machine is the RW16, commercially available from Urbinati, Italy.

Figure 17A shows a gripping element 2 having a plurality of fingers 4. There are four fingers 4. Each finger 4 comprises a first portion 32, a second portion 34, and a third portion 36. Each of the portions is arranged along the length of the finger 4. The first portion 32 is the uppermost portion and the third portion 36 is the lowermost portion. The second portion 34 is arranged between the first portion 32 and the third portion 36. The third portion 36 comprises a tip 38 of the finger 4. The tip 38 is the end of the finger 4 which is arranged to grip the plug.

The first portion 32 is arranged generally vertically. The third portion 36 is arranged generally vertically. The second portion 34 is arranged at an angle relative to the first portion 32 and the third portion 36. In particular, the second portion 34 is angled towards a centre of the gripping element 2. The second portion 34 angles inwards towards opposite finger 4. The third portion 36 is generally parallel to the first portion 32, but offset due to the angled second portion 34.

The gripping element 2 comprises a guide 40. The guide 40 is a star shaped piece of metal through which the fingers 4 are arranged.

Figure 17A shows the fingers 4 in the open configuration. In use, the fingers 4 move to the closed configuration. The guide 40 guides the movement of the fingers 4 between the open and closed configurations.

Figure 17B shows the fingers 4 in the closed configuration. The fingers 4 have moved downwards through the guide 40. In particular, the second portion 34 is now arranged generally at the guide 40. The third portion 36 now protrudes beyond the guide 40. In use, the tips 38 grip the plug when the fingers 4 move into the closed configuration. The tips 38 of the four fingers 4 move towards each other in the closed configuration relative to the open configuration by virtue of the angled second portion 34 passing through the guide 40. Figure 17B shows that the tips 38 are separated in the closed configuration. This allows the fingers 4 to grip a plug. Conventionally, this can be used to grip around a plug containing growing media and roots of the plant.

Referring to Figures 18A and 18B, according to a fifth embodiment of the present disclosure, a gripping element 502 for use in a machine 500 is provided. The gripping element 502 is the same as the gripping element 102 of the first embodiment, except where described below. Similar reference numerals are used to denote similar features. The gripping element 502 may be provided in any of the first to fourth embodiments.

The gripping element 502 of the fifth embodiment is an adapted gripping element of the conventional gripping element 2 of Figures 17A and 17B. The gripping element 502 is especially adapted for transplanting plugs of *Sphagnum.*

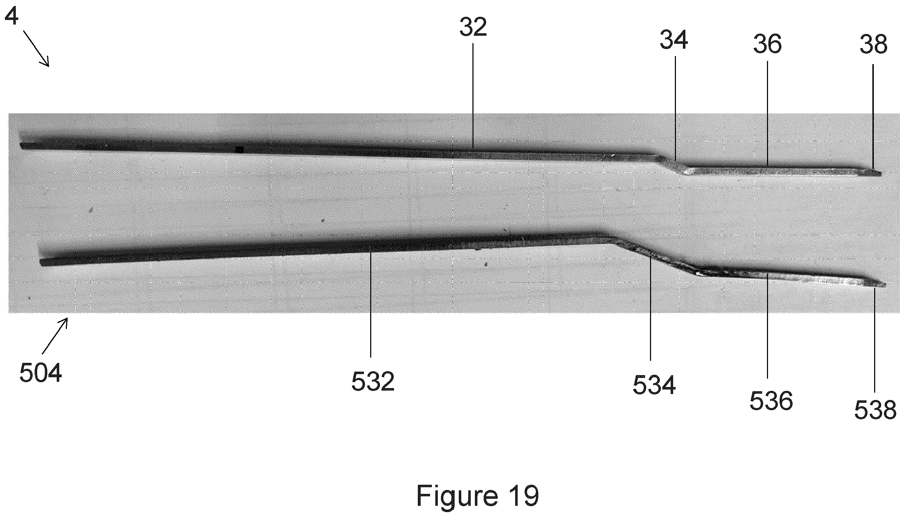

Figure 18A shows the gripping element 502 in an open configuration. The gripping element 502 comprises four fingers 504 similar to the fingers 4 except where explained below. The fingers 504 comprise a first portion 532, a second portion 534, and a third portion 536. The second portion 534 is longer than the second portion 34 shown Figure 17A. In particular, the fingers 4 have been adapted to provide a longer angled second portion 534. This is shown in more detail in Figure 19.

Additionally, the gripping element 502 further includes a pushing block 542. The pushing block 542 is arranged below the guide 540. In particular, the pushing block 542 is arranged further in the second direction of the third axis relative to the guide 540. The pushing block 542 is configured to push the plug of *Sphagnum* when the gripping element 502 moves in the second axis before closing the fingers as shown in Figure 13.

The gripping element 502 further comprises a pushing element 506. The pushing element 506 is similar to the pushing element 106 of the first embodiment except where described below. The pushing element 506 comprises a pusher in the form of a flexible flap 544. The flexible flap 544 is made from foam rubber, but may be made from other materials in other embodiments. The flexible flap 544 is arranged on an arm 546. The arm 546 is attached to a main body of the gripping element 504. The arm 546 is spaced from the fingers 504 to avoid interference. The flexible flap 544 is arranged at the end of the arm 546 so that it extends further down (in the second direction of the third axis) than the arm 546. In the open configuration, the flexible flap 544 extends further down than the fingers 504.

Figure 18B shows the gripping element 502 in the closed configuration. The fingers 504 are moved downwards and together, which in use is used to grip the plug of *Sphagnum.* In the fifth embodiment, compressed air is used to actuate the movement of the fingers 504, but other mechanisms may be used in other embodiments. Figure 18B shows the fingers 504 moved downwards where the third portion 536 extend beyond the guide 540 and the pushing block 542. The tips 538 of the fingers 504 extend beyond the flexible flap 544. This ensures that the fingers 504 grip the plug without the flexible flap 544 interfering.

Because the second portion 534 is longer than in Figures 17A and 17B, the fingers 504 are moved further inwards in the closed configuration. As shown in Figure 18B, the tips 538 nearly meet, leaving a much smaller separation than Figure 17B. In the fifth embodiment, the tips 538 are separated by less than 5 mm. This is an adaptation for gripping *Sphagnum* because it provides a better grip for strands of *Sphagnum.* Conventionally, it is easier to grip a plug of growing media, but such a separation would poorly grip loose strands of *Sphagnum.* Accordingly, the closer separation provides a better grip to transplant plugs of *Sphagnum.* Such a situation would be disadvantageous for conventional machines as a small separation would damage the seedlings.

The flexible flap 544 of the pushing element 506 is deformable so that the flexible flap 544 deforms when it engages the plug 550. This promotes contact between the flexible flap 544 and the plug 550 and helps ensure a smooth pushing over of the plug 550. To achieve this, the flexible flap 544 extends beyond the arm 546 of the pushing element 506 in the second direction of the third axis closer to the second location. For example, in the fifth embodiment, the flexible flap 544 extends lower than the arm 546. The flexible flap 544 is arranged on the second side of the arm 546 opposite to the location of the fingers 504 relative to the arm 546. This allows the flexible flap 544 to deform and bend as the arm 546 moves across the plug 550 and the flexible flap 544 engages the plug. The end of the flexible flap 544 can bend towards the second direction in the second axis which is away from the fingers 504. This also allows contact between the flexible flap 544 and the side of the plug.

The flexible flap 544 is useful as it does not damage a plug tray when the plug is removed and when the plug is pushed in the second axis at the first location by the pushing block 542. Instead, the flexible flap 544 bends. When the plug is pushed by the pushing block 542 at the first location within the plug tray, the pushing block 542 (e.g. a lowermost point) is between 20 mm and 30 mm from the upper surface of the plug tray. This ensures that the pushing block 542 does not contact the plug tray. The arm 546 (e.g. a lowermost point) is between 5 mm and 15 mm from the upper surface of the plug tray. This ensures that the arm 546 does not contact the plug tray. The flexible flap 544 is in contact with the plug tray and is slightly bent. However, as it is flexible, this does not damage the tray and assists in pushing the plug by the pushing block 542.

In the second location, the fingers 504 are in the closed configuration and the tips 538 are between 5 mm and 15 mm from the upper surface of the wrapping on the output conveyor. The pushing block 542 (e.g. a lowermost point) is between 50 mm and 60 mm from the upper surface of the wrapping. This ensures that the pushing block 542 does not interfere with the release of the plug. The arm 546 (e.g. a lowermost point) is between 30 mm and 40 mm from the upper surface of the wrapping. This ensures that the arm 546 does not interfere with the release of the plug. The flexible flap 544 is between 20 mm and 30 mm from the upper surface of the wrapping.

Referring to Figure 19, a finger 4 of Figure 17A and 17B is shown at the top of the Figure, and a finger 504 of Figure 18A and 18B is shown at the bottom of the Figure. The finger 4 comprises a first portion 32, a second portion 34, and a third portion 36 having a tip 38. The finger 504 of the fifth embodiment of the present disclosure comprises a first portion 532, a second portion 534, and a third portion 536 having a tip 538. The second portion 534 of the adapted machine in accordance with the present disclosure is shown to be longer than the second portion 34 of the conventional machine. This provides the closer separation shown in Figure 18B compared to Figure 17B. The second portion 34 is 5 mm. The second portion 534 is 20 mm.

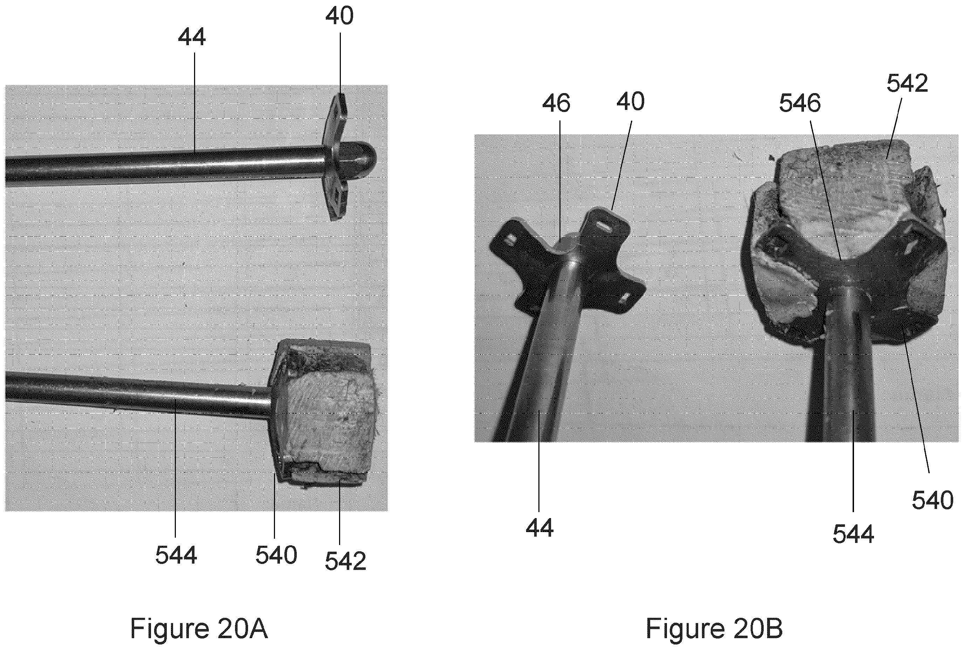

Referring to Figure 20A, a guide 40 of a gripping element 2 of Figures 17A and 17B is shown at the top of the Figure, and a guide 540 of a gripping element 502 is shown at the bottom of the Figure. Referring to Figure 20B, a guide 40 of a gripping element 2 of Figures 17A and 17B is shown at the left of the Figure, and a guide 540 of a gripping element 502 is shown at the right of the Figure.

The guide 40 includes a rod 44 which extends along a length of the gripping element 2. The rod 44 is used to support the guide 40. The rod 44 can be seen through the centre of the fingers 4 in Figures 17A and 17B. Referring to Figure 20B, the guide 40 is a star shape having four prongs. Each prong has a hole for receiving and guiding the fingers 4 therethrough. The guide 40 comprises a recess between each prong. The guide 40 comprises a large recess 46 in one of the four recesses. The large recess 46 is larger than the other recesses. This is included in conventional machines to provide space for the stem of a plant which extends through the large recess 46 when the fingers 4 grip the growing media of the plug.

The guide 540 of the fifth embodiment of the present disclosure includes a guide 540 similar to the guide 40, and includes a rod 544 similar to the rod 44. The gripping element 504 also includes a pushing block 542. The pushing block 542 is attached to the guide 540 below the guide 540. In particular, the pushing block 542 is attached at the end of the rod 544. As shown in Figure 20B, the pushing block 542 provides gaps for the fingers 504 to pass through the guide 540. However, the pushing block 542 fills the large recess 546 of the guide 540 because this is not needed. As the fingers 504 do not grip the growing media, and instead grip the *Sphagnum* itself, there is not a fragile stem that extends up through the guide 540.

The pushing block 542 is used to push the *Sphagnum* in a similar manner to the third embodiment shown in Figure 13, but the pushing is performed by the pushing block 542 rather than the fingers 504. This makes the pushing easier as there is a larger area for pushing the plug.

In other embodiments, the machine of any of the above embodiments comprises a plurality of gripping elements. In a sixth embodiment, the plurality of gripping elements includes eight gripping elements. In other embodiments, the plurality of gripping elements includes different numbers, such as sixteen or thirty-two gripping elements. Each gripping element is configured to transplant a respective plug of *Sphagnum.* The gripping elements may be configured to be operated concurrently. Thus, the machine of the sixth embodiment is configured to transplant eight plugs at the same time.

In the sixth embodiment, the machine is configured to grip eight plugs in a plug tray. In particular, the eight plugs are aligned in the same row of the plug tray. A spacing between the gripping elements is set to align with each respective plug cell of the plug tray for gripping the plugs. In the sixth embodiment, the gripping elements are generally adjacent to each other. The plug tray has eight plug cells in a row of the plug tray.

In cases where a different number of plug cells are provided in a row of a plug tray, a corresponding number of gripping elements can be provided. In other cases, two plug trays may be used adjacently, and sixteen gripping elements can be used to grip the sixteen adjacent plugs. In other examples, only part of the number of gripping elements are in use at one time. Accordingly, more than eight gripping elements may be provided, but only eight are used for a tray with eight plug cells in a row. In other examples, a number of gripping elements fewer than the number of plug cells may be used. For example, four gripping elements may be used to transplant four plugs of an eight cell row of a plug tray, and the gripping elements may subsequently shift along to transplant the second set of four plugs, or the tray may be shifted to allow the gripping elements to grip the remaining our plugs.

Once the gripping elements have gripped the plugs, in the sixth embodiment, the gripping elements are separated in the first axis. In particular, the gripping elements are moved in the first axis to provide a spacing between adjacent gripping elements. In the sixth embodiment, the gripping elements are moved so that each gripping element is spaced from the adjacent gripping element by between 5 cm and 15 cm.

In the sixth embodiment, the separation of the gripping elements in the first axis is performed after the movement in the third axis away from the respective first locations and before the movement in the second axis towards a position aligned with the respective second locations in the third axis. In other examples, the movement in the first axis may be performed concurrently with or after the movement of the gripping elements in the third axis and/or the second axis.

This allows the plugs to be spaced apart in the first axis when released at the respective second locations. In the sixth embodiment, the plugs are released onto a wrapping arranged on the output conveyor at the second locations. Accordingly, the plugs are arranged on the wrapping at positions spaced apart. In the sixth embodiment, the plugs are spaced apart by between 5 cm and 15 cm.

The motion of the gripping elements can then be repeated to transplant another set of plugs. In the sixth embodiment, the gripping elements return to the plug tray and grip another set of eight plugs. The plug tray comprises a plurality of rows of plug cells. In the sixth embodiment, the plug tray comprises sixteen rows of eight (totalling 128 cells). The gripping elements can therefore repeat the transplanting sixteen times for a full tray to transplant 128 plugs of *Sphagnum.* Whilst the gripping elements grip the set of plugs, the support can be used to push against plugs of *Sphagnum* in the plug tray which have not yet been transplanted. For example, the support can push against plugs further in the second axis towards the second location than the plugs being gripped by the gripping elements. In the sixth embodiment, the support pushes at least against plugs in an adjacent row to the row of plugs being removed from the plug tray. This allows the plugs to be separated from the adjacent row and prevents the adjacent row from being withdrawn from the plug at the same time (for example where strands of *Sphagnum* from plugs of adjacent rows tangle).

This second set of plugs can be placed adjacent the first set of plugs on the wrapping, for example by moving the conveyor to move the wrapping along. In other examples, a second wrapping adjacent the first wrapping is provided to separate the set of plugs. Otherwise, the wrapping may be subsequently cut to divide the plugs into groups on parts of the wrapping. For example, each set of the plugs may form a roll of plugs. A plurality of wrappings may be arranged on the conveyor in rows in the second axis. This allows subsequent sets of plugs to be placed on different rows of wrappings. This reduces the movement of the conveyor between sets of movement of the gripping element, reducing down-time of the machine and thereby improving speed and efficiency. Once each row of the wrapping receives a set of plugs, the conveyor may then be advanced to move along the plurality of rows of wrappings to allow further transplanting onto the plurality of rows.

It has been found that operating a machine according to the present disclosure vastly improves the efficiency of transplanting plugs of *Sphagnum.* In particular, the machine of the sixth embodiment has been found to provide productivity of at least 4000 plugs per hour. Transplanting by hand provided a typical productivity of 400 to 600 plugs per hour for the same number of operators.

In some embodiments, the machine comprises a user interface. The user interface may be used to program a processor which controls the actuators to operate the machine.

One or more features of each embodiment may be provided in isolation of other features of that embodiment and may be combined with other embodiments. For example, the plug tray of the fourth embodiment may be provided in other embodiments such as the first embodiment. In another example, the angled second portion 534 of the fifth embodiment may be provided in other embodiments such as the first embodiment without the pushing block 542 and/or the flexible flap 544.

It will be appreciated that in each of the above embodiments, the machine is provided as well as a method of operating the machine. Additionally, it will be appreciated that a computer program, computer program product, or computer-readable medium is provided which comprises instructions which, when executed by a processor, cause the processor to perform the method. For example, the processor of the machine contains instructions, such as in the form of software, to operate the machine.

The present disclosure also includes the following numbered clauses:
1. A horticultural plug transplanting machine adapted for transplanting *Sphagnum,* comprising: a gripping element for gripping a plug of *Sphagnum,* wherein the gripping element comprises a plurality of fingers; an actuator for operating the gripping element; and a pushing element for pushing the plug of *Sphagnum,* wherein the pushing element is coupled to the gripping element and is operable by moving the gripping element; wherein the actuator is configured to operate the gripping element to transplant the plug of *Sphagnum* from a first location to a second location, comprising: translating the gripping element in a first plane, the first plane comprising a first axis and a second axis, to a position aligned with the first location along a third axis, wherein the third axis is perpendicular to the first axis and the second axis; extending the gripping element in the third axis towards the first location; closing the plurality of fingers to grip the plug of *Sphagnum* at the first location; retracting the gripping element in the third axis away from the first location; translating the gripping element in the first plane to a position aligned with the second location along the third axis; extending the gripping element in the third axis towards the second location; opening the plurality of fingers to release the plug of *Sphagnum* at the second location; and wherein the actuator is configured to operate the pushing element to push the plug of *Sphagnum* to tilt the plug of *Sphagnum* from a first orientation to a second orientation at the second location, comprising: translating the gripping element in the second axis in order to translate the pushing element in the second axis, wherein the translating causes the pushing element to push the plug of *Sphagnum* over at the second location to tilt the plug of *Sphagnum* into the second orientation.
2. The machine according to clause 1, wherein the plug of *Sphagnum* in the second orientation is arranged on its side at the second location.
3. The machine according to clause 2, wherein a length of the plug of *Sphagnum* in the second orientation is aligned with the first plane.
4. The machine according to any preceding clause, wherein the tilting is performed about the first axis.
5. The machine according to any preceding clause, wherein the plug of *Sphagnum* in the first orientation is arranged upright at the first location.
6. The machine according to any preceding clause, further comprising a plug tray at the first location, wherein the plug of *Sphagnum* is arranged in a plug cell of the plug tray at the first location.
7. The machine according to any preceding clause, further comprising a substrate at the second location, wherein the plug of *Sphagnum* is arranged on the substrate at the second location.
8. The machine according to clause 7, wherein the substrate comprises a wrapping for wrapping the plug of *Sphagnum* on its side about the second axis.
9. The machine according to any preceding clause, wherein the pushing element is configured to push the plug of *Sphagnum* at an upper portion of the plug of *Sphagnum.*
10. The machine according to any preceding clause, wherein the pushing element is arranged, when pushing the plug of *Sphagnum,* at a distance in the third axis from the second location closer than the plurality of fingers is to the second location.
11. The machine according to any preceding clause, wherein the pushing element comprises a flexible flap for engaging the plug.
12. The machine according to any preceding clause, wherein the first axis and the second axis are each generally horizontal and the third axis is generally vertical.
13. The machine according to clause 12, wherein the extending in the third axis comprises raising in the vertical direction, and wherein the retracting in the third axis comprises lowering in the vertical direction.
14. The machine according to any preceding clause, wherein the machine comprises an output conveyor at the second location.
15. The machine according to any preceding clause, wherein the gripping element further comprises a pushing block.
16. The machine according to any preceding clause, wherein the transplanting further comprises translating the gripping element in the second axis after the extending the griping element towards the first location and before the closing the plurality of fingers to grip the plug of *Sphagnum.*
17. The machine according to clause 16 when dependent on clause 15, wherein the translating of the gripping element in the second axis after the extending the griping element towards the first location and before the closing the plurality of fingers to grip the plug of *Sphagnum* causes the pushing block to push the plug of *Sphagnum* in the second axis to tilt the plug of *Sphagnum.*
18. The machine according to any preceding clause, wherein the transplanting further comprises retracting the gripping element in the third axis away from the second location after the opening of the plurality of fingers and before the pushing of the plug of *Sphagnum.*
19. The machine according to any preceding clause, wherein the gripping element comprises a guide for guiding the plurality of fingers to move between an open configuration and a closed configuration, wherein each finger of the plurality of fingers comprises a portion along a length of the finger, wherein the portion is arranged at an angle relative to the third axis, wherein the portion is arranged to move through the guide to reduce a separation between the fingers in the closed configuration relative to the open configuration.
20. The machine according to clause 19, wherein the portion has a length of at least 15 mm.
21. The machine according to any preceding clause, comprising: a plurality of gripping elements, each gripping element of the plurality of gripping elements for gripping a respective plug of a plurality of plugs of *Sphagnum,* and each gripping element comprising a plurality of fingers; and a plurality of pushing elements for pushing the plurality of plugs of *Sphagnum,* wherein each pushing element is coupled to a gripping element of the plurality of gripping elements and is operable by moving the respective gripping element; wherein the actuator is configured to operate the plurality of gripping elements to transplant the plurality of plugs of *Sphagnum* from a plurality of first locations to a plurality of second locations; and wherein the actuator is configured to operate the plurality of pushing elements to push the plurality of plugs of *Sphagnum* to tilt the plurality of plugs of *Sphagnum* from a first orientation to a second orientation at the plurality of second locations.
22. The machine according to any preceding clause, further comprising a processor configured to control the actuator.
23. A method of operating a horticultural plug transplanting machine adapted for transplanting *Sphagnum,* the machine comprising a gripping element for gripping a plug of *Sphagnum,* the gripping element comprising a plurality of fingers, the machine further comprising an actuator for operating the gripping element, and the machine further comprising a pushing element for pushing the plug of *Sphagnum,* wherein the pushing element is coupled to the gripping element and is operable by moving the gripping element, the method comprising: transplanting the plug of *Sphagnum* from a first location to a second location, comprising: translating the gripping element in a first plane, the first plane comprising a first axis and a second axis, to a position aligned with the first location along a third axis, wherein the third axis is perpendicular to the first axis and the second axis; extending the gripping element in the third axis towards the first location; closing the plurality of fingers to grip the plug of *Sphagnum* at the first location; retracting the gripping element in the third axis away from the first location; translating the gripping element in the first plane to a position aligned with the second location along the third axis; extending the gripping element in the third axis towards the second location; opening the plurality of fingers to release the plug of *Sphagnum* at the second location; and pushing the plug of *Sphagnum* to tilt the plug of *Sphagnum* from a first orientation to a second orientation at the second location, comprising: translating the gripping element in the second axis in order to translate the pushing element in the second axis, wherein the translating causes the pushing element to push the plug of *Sphagnum* over at the second location to tilt the plug of *Sphagnum* into the second orientation.
24. The method according to clause 23, further comprising providing and operating the machine according to any of clauses 2 to 22.
25. A computer program, computer program product, or computer-readable medium comprising instructions which, when executed by a processor, cause the processor to perform the method according to clause 23 or 24.

## Claims

1. A horticultural plug transplanting machine adapted for transplanting *Sphagnum,* comprising:
a gripping element for gripping a plug of *Sphagnum,* wherein the gripping element comprises a plurality of fingers;
an actuator for operating the gripping element; and
a pushing element for pushing the plug of *Sphagnum,* wherein the pushing element is coupled to the gripping element and is operable by moving the gripping element;
wherein the actuator is configured to operate the gripping element to transplant the plug of *Sphagnum* from a first location to a second location; and
wherein the actuator is configured to operate the pushing element to push the plug of *Sphagnum* to tilt the plug of *Sphagnum* from a first orientation to a second orientation at the second location, comprising translating the gripping element to translate the pushing element, wherein the translating causes the pushing element to push the plug of *Sphagnum* over at the second location to tilt the plug of *Sphagnum* into the second orientation.

2. The machine according to claim 1, wherein the transplanting the plug comprises:
translating the gripping element towards the first location;
closing the plurality of fingers to grip the plug of *Sphagnum* at the first location;
translating the gripping element towards the second location; and
opening the plurality of fingers to release the plug of *Sphagnum* at the second location.

3. The machine according to claim 2, wherein the translating the gripping element towards the first location comprises:
translating the gripping element in a first plane, the first plane comprising a first axis and a second axis, to a position aligned with the first location along a third axis, wherein the third axis is perpendicular to the first axis and the second axis; and
extending the gripping element in the third axis towards the first location.

4. The machine according to claim 3, wherein the translating the gripping element towards the second location comprises:
retracting the gripping element in the third axis away from the first location;
translating the gripping element in the first plane to a position aligned with the second location along the third axis; and
extending the gripping element in the third axis towards the second location.

5. The machine according to claim 3 or 4, wherein the translating the gripping element to translate the pushing element is in the second axis.

6. The machine according to any preceding claim, wherein the plug of *Sphagnum* in the second orientation is arranged on its side at the second location.

7. The machine according to any preceding claim, further comprising a plug tray at the first location, wherein the plug of *Sphagnum* is arranged in a plug cell of the plug tray at the first location.

8. The machine according to any preceding claim, further comprising a substrate at the second location, wherein the plug of *Sphagnum* is arranged on the substrate at the second location, optionally wherein the substrate comprises a wrapping for wrapping the plug of *Sphagnum* on its side about the second axis.

9. The machine according to any preceding claim, wherein the pushing element comprises a flexible flap for engaging the plug.

10. The machine according to any preceding claim, wherein the machine comprises an output conveyor at the second location.

11. The machine according to claim 5, wherein the gripping element further comprises a pushing block, and wherein the transplanting further comprises translating the gripping element in the second axis after the extending the gripping element towards the first location and before the closing the plurality of fingers to grip the plug of *Sphagnum,* in order to cause the pushing block to push the plug of *Sphagnum* in the second axis to partially tilt the plug of *Sphagnum.*

12. The machine according to any preceding claim, wherein the gripping element comprises a guide for guiding the plurality of fingers to move between an open configuration and a closed configuration, wherein each finger of the plurality of fingers comprises an angled portion along a length of the finger, wherein the angled portion is arranged to move through the guide to reduce a separation between the fingers in the closed configuration relative to the open configuration.

13. The machine according to any preceding claim, comprising:
a plurality of gripping elements, each gripping element of the plurality of gripping elements for gripping a respective plug of a plurality of plugs of *Sphagnum,* and each gripping element comprising a plurality of fingers; and
a plurality of pushing elements for pushing the plurality of plugs of *Sphagnum,* wherein each pushing element is coupled to a respective gripping element of the plurality of gripping elements and is operable by moving the respective gripping element;
wherein the actuator is configured to operate the plurality of gripping elements to transplant the plurality of plugs of *Sphagnum* from a plurality of first locations to a plurality of second locations; and
wherein the actuator is configured to operate the plurality of pushing elements to push the plurality of plugs of *Sphagnum* to tilt the plurality of plugs of *Sphagnum* from a first orientation to a second orientation at the plurality of second locations comprising translating the plurality of gripping elements to translate the plurality of pushing elements, wherein the translating causes the plurality of pushing elements to push the plurality of plugs of *Sphagnum* over at the plurality of second locations to tilt the plurality of plugs of Sphagnum into the second orientation.

14. A method of operating a horticultural plug transplanting machine adapted for transplanting *Sphagnum,* the machine comprising a gripping element for gripping a plug of *Sphagnum,* the gripping element comprising a plurality of fingers, the machine further comprising an actuator for operating the gripping element, and the machine further comprising a pushing element for pushing the plug of *Sphagnum,* wherein the pushing element is coupled to the gripping element and is operable by moving the gripping element, the method comprising:
transplanting the plug of *Sphagnum* from a first location to a second location by the actuator operating the gripping element; and
pushing the plug of *Sphagnum* to tilt the plug of *Sphagnum* from a first orientation to a second orientation at the second location by the actuator operating the pushing element by translating the gripping element to translate the pushing element, wherein the translating causes the pushing element to push the plug of *Sphagnum* over at the second location to tilt the plug of *Sphagnum* into the second orientation.

15. A computer program, computer program product, or computer-readable medium comprising instructions which, when executed by a processor, cause the processor to perform the method according to claim 14.
